# EUROPEAN PATENT SPECIFICATION

(11) **EP 3 503 657 B1**
(45) Date of publication and mention of the grant of the patent: **01.09.2021**
(21) Application number: 18855109.7
(22) Date of filing: 14.09.2018
(51) Int. Cl.: H04W 72/12

(54) **SCHEDULING REQUEST SENDING METHODS AND TERMINAL DEVICES**
PLANUNGSANFORDERUNGSENDEVERFAHREN UND -ENDGERÄTEVORRICHTUNGEN
PROCÉDÉS D'ENVOI DE REQUÊTE DE PLANIFICATION ET DISPOSITIFS TERMINAL

(30) Priority: 28.09.2017 CN 201710905436
(43) Date of publication of application: 26.06.2019
(73) Proprietor: HUAWEI TECHNOLOGIES CO., LTD., Shenzhen Guangdong 518129 (CN)
(72) Inventor: KUANG, Yiru, Shenzhen Guangdong 518129 (CN); LIU, Xing, Shenzhen Guangdong 518129 (CN); XU, Haibo, Shenzhen Guangdong 518129 (CN)
(74) Representative: Maiwald Patent- und Rechtsanwaltsgesellschaft mbH
(86) International application number: PCT/CN2018/105617
(87) International publication number: WO 2019/062558

(56) References cited:
- CN-A- 102 726 112
- CN-A- 106 488 576
- US-A1- 2016 157 256
- US-A1- 2016 157 256
- QUALCOMM INCORPORATED: "Data Stall due to logical Channel SR Prohibit Timer", 3GPP DRAFT; R2-1705559, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275896, Retrieved from the Internet: URL:http://www.3gpp.org/ftp/Meetings_3GPP_ SYNC/RAN2/Docs/ [retrieved on 2017-05-14]
- OPPO: "Details of SR procedure", 3GPP DRAFT; R2-1707736 - DETAILS OF SR PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317697, Retrieved from the Internet: URL:http://www.3gpp.org/ftp/Meetings_3GPP_ SYNC/RAN2/Docs/ [retrieved on 2017-08-20]
- OPPO: "Mapping logical channel to SR configuration", 3GPP DRAFT; R2-1707737 - MAPPING LOGICAL CHANNEL TO SR CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Berlin, Germany; 20170821 - 20170825 20 August 2017 (2017-08-20), XP051317698, Retrieved from the Internet: URL:http://www.3gpp.org/ftp/Meetings_3GPP_ SYNC/RAN2/Docs/ [retrieved on 2017-08-20]
- "3rd Generation Partnership Project; Technical Specification Group Radio Access Network; Evolved Universal Terrestrial Radio Access (E-UTRA); Medium Access Control (MAC) protocol specification (Release 14)", 3GPP STANDARD ; TECHNICAL SPECIFICATION ; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.4.0, 25 September 2017 (2017-09-25), pages 1-108, XP051337312, [retrieved on 2017-09-25]

## Description

### TECHNICAL FIELD

The present invention relates to the field of communications technologies, and in particular, to scheduling request sending methods and terminal devices.

### BACKGROUND

In Long Term Evolution (Long Term Evolution, LTE), user equipment (User Equipment, UE) notifies a network device (for example, a base station), by using a buffer status report (Buffer Status Reporting, BSR), of an amount of data that needs to be sent in an uplink buffer, so that the network device determines a quantity of uplink resources to be allocated to the UE. When the UE triggers a regular buffer status report (Regular BSR) and no uplink resource is available in a current transmission time interval (Transmission Time Interval, TTI), the UE triggers a scheduling request (Scheduling Request, SR) to notify the network device that the UE needs to send data, and the network device allocates, to the UE, sufficient uplink resources for sending the BSR, and the UE sends the BSR to the network device by using the uplink resources. However, in some scenarios, the network device knows a service status of the UE, and may actively send the uplink resources to the UE to allow the UE to transmit data, and the UE does not need to send the SR to request resources. In such a scenario, a logical channel scheduling request prohibit timer (logical Channel SR-Prohibit Timer) is specially introduced to reduce unnecessary frequent triggering of the SR.

In a fifth generation mobile communications technology (5th-Generation, 5G) scenario, one UE has a plurality of SR configurations, that is, different logical channels of the UE may be mapped onto different SR configurations, and one logical channel of the UE may be mapped onto zero, one or at least two SR configurations, and at least two logical channels of the UE may also be mapped onto a same SR configuration, so that there may be at least two independent SR processes. For example, the UE includes a logical channel 1, a logical channel 2, and a logical channel 3, and there are an SR configuration 1 and an SR configuration 2. The logical channels land 2 are mapped onto the SR configuration 1, and the logical channel 3 is mapped onto the SR configuration 2. When data arrives at the logical channel 1, the Regular BSR is triggered, and further the SR is triggered, the UE may select an SR resource that is indicated in the SR configuration 1 to send the SR. When data arrives at the logical channel 3, the Regular BSR is triggered, and further the SR is triggered, the UE may select an SR resource that is indicated in the SR configuration 2 to send the SR. When there are at least two independent SR processes at the same time, how to control the logical channel scheduling request prohibit timer is a technical problem that is being studied by a person skilled in the art.

QUALCOMM INCROPORATED: "Data Stall due to logical Channel SR Prohibit Timer" describes problems with restarting the logicalChannelSR-ProhibitTimer, in particular data stall on lower priority logical channel as the SDU in the lower priority logical channel will not be transmitted due to logiclaChannelSR-ProhibitTimer running and the SDU will be discarded on PDCP discard timer expiry. Consequently, it is proposed to revert the agreement for restarting the logicalChannelSR-ProhibitTimer on arrival of a new data for transmission.

### SUMMARY

Embodiments of the present invention disclose a scheduling request sending method and a terminal device, so as to reduce unnecessary triggering of an SR.

According to a first aspect, an embodiment of the present invention provides a scheduling request sending method. The method includes:
if data on a first logical channel of a terminal device triggers a buffer status report BSR, and the first logical channel is not configured with logical channel scheduling request prohibition:
   triggering a scheduling request SR in a running process of a logical channel scheduling request prohibit timer, and determining, by the terminal device, whether to send the SR.

By performing the foregoing steps, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR may still be triggered without stopping the running logical channel scheduling request prohibit timer, thereby avoiding unnecessary triggering of the SR that is caused by stopping the logical channel scheduling request prohibit timer.

With reference to the first aspect, in a first possible implementation of the first aspect, the terminal device is configured with at least two SR configurations, and the first logical channel is mapped onto at least one SR configuration; and if the terminal device determines to send the SR, the method further includes: sending, by the terminal device, the SR by using an SR configuration in the at least one SR configuration. That is, when there are at least two SR configurations, if the first logical channel is not configured with the logical channel scheduling request prohibition, the first logical channel may not be affected by the logical channel scheduling request prohibit timer, and the SR may still be triggered; and if the terminal device determines to send the SR, the terminal device may send the SR by using a resource in the SR configuration onto which the first logical channel is mapped.

With reference to the first aspect, in a second possible implementation of the first aspect, the terminal device is configured with one SR configuration, and the first logical channel is mapped onto the SR configuration; and if the terminal device determines to send the SR, the method further includes: sending, by the terminal device, the SR by using the SR configuration. That is, when there is one SR configuration, if the first logical channel is not configured with the logical channel scheduling request prohibition, the first logical channel may not be affected by the logical channel scheduling request prohibit timer, and the SR may still be triggered; and if the terminal device determines to send the SR, the terminal device may send the SR by using a resource in the SR configuration onto which the first logical channel is mapped.

According to a second aspect, an embodiment of the present invention provides a scheduling request sending method. The method includes:
if data on a first logical channel of a terminal device triggers a buffer status report BSR, and the first logical channel is not configured with logical channel scheduling request prohibition, when a logical channel scheduling request prohibit timer is running:
   if an SR configuration onto which the first logical channel is mapped is different from an SR configuration onto which a second logical channel is mapped, triggering a scheduling request SR, and determining, by the terminal device, whether to send the SR; or
   if an SR configuration onto which the first logical channel is mapped is the same as an SR configuration onto which a second logical channel is mapped, stopping, by the terminal device, the logical channel scheduling request prohibit timer, triggering a scheduling request SR, and determining, by the terminal device, whether to send the SR; where
   the second logical channel is a logical channel in which data triggers the buffer status report BSR and that is configured with the logical channel scheduling request prohibition.

By performing the foregoing steps, the terminal device determines, based on whether the SR configuration onto which the first logical channel is mapped is the same as the SR configuration onto which the second logical channel is mapped, whether the currently running logical channel scheduling request prohibit timer needs to be stopped before sending the SR, thereby avoiding unnecessary triggering of the SR that is caused by improper stopping of the logical channel scheduling request prohibit timer.

With reference to the second aspect, in a first possible implementation of the second aspect, a quantity of the second logical channels is at least two; and that the SR configuration onto which the first logical channel is mapped is different from the SR configuration onto which the second logical channel is mapped includes that:
the SR configuration onto which the first logical channel is mapped is different from an SR configuration onto which any one of the at least two second logical channels is mapped; or
the SR configuration onto which the first logical channel is mapped is different from an SR configuration onto which a second logical channel that is the last one in the at least two second logical channels triggers the buffer status report BSR is mapped; or
the SR configuration onto which the first logical channel is mapped is different from an SR configuration onto which a second logical channel that has a highest priority in the at least two second logical channels is mapped.

With reference to the second aspect, in a second possible implementation of the second aspect, the first logical channel is mapped onto at least two SR configurations; and that the SR configuration onto which the first logical channel is mapped is different from the SR configuration onto which the second logical channel is mapped includes that:
a first SR configuration is different from the SR configuration onto which the second logical channel is mapped, and the first SR configuration is an SR configuration that is in the at least two SR configurations onto which the first logical channel is mapped and that is associated with an indication parameter required by current to-be-transmitted data, where the indication parameter includes at least one of a transmission time interval TTI, a subcarrier spacing, and a cyclic prefix length; or
any one of the at least two SR configurations is different from the SR configuration onto which the second logical channel is mapped; or
the at least two SR configurations are all different from the SR configuration onto which the second logical channel is mapped.

According to a third aspect, an embodiment of the present invention provides a scheduling request sending method. The method includes:
if data on a first logical channel of a terminal device triggers a buffer status report BSR, and the first logical channel is not configured with logical channel scheduling request prohibition, when a logical channel scheduling request prohibit timer is running:
   stopping, by the terminal device, the logical channel scheduling request prohibit timer, triggering a scheduling request SR, mapping the first logical channel onto at least one SR configuration, and mapping a second logical channel onto at least one SR configuration, where
   the SR configuration onto which the first logical channel is mapped is used to send the SR; or
   an SR configuration onto which a logical channel that has a highest priority in the first logical channel and the second logical channel is mapped is used to send the SR; or
   an SR configuration in which a time location of a scheduling request resource is closest to a current time and that is of the SR configuration onto which the first logical channel is mapped and the SR configuration onto which the second logical channel is mapped is used to send the SR; or
   an SR configuration in which a time length of the scheduling request prohibit timer is the shortest and that is of the SR configuration onto which the first logical channel is mapped and the SR configuration onto which the second logical channel is mapped is used to send the SR; or
   an SR configuration whose quantity of maximum retransmission times of the scheduling request is the largest and that is of the SR configuration onto which the first logical channel is mapped and the SR configuration onto which the second logical channel is mapped is used to send the SR; where
   the second logical channel is a logical channel in which data triggers the buffer status report BSR and that is configured with the logical channel scheduling request prohibition.

By performing the foregoing steps, the SR configuration used by the triggered SR is an SR configuration that is selected from the at least two SR configurations based on a preset rule, so that the terminal device may select, based on a current SR sending requirement, an SR configuration that is most advantageous for sending the SR to send the SR, so as to enable the terminal device to obtain an uplink resource more quickly.

According to a fourth aspect, an embodiment of the present invention provides a scheduling request sending method. The method includes:
if data on a first logical channel of a terminal device triggers a buffer status report BSR, the first logical channel is not configured with logical channel scheduling request prohibition, and an SR configuration onto which the first logical channel is mapped is a second SR configuration, when a logical channel scheduling request prohibit timer associated with the second SR configuration is running:
   stopping, by the terminal device, the logical channel scheduling request prohibit timer associated with the second SR configuration, and triggering a scheduling request SR; where
   the terminal device is configured with at least two SR configurations, the at least two SR configurations include the second SR configuration, and each of the at least two SR configurations is associated with its respective logical channel scheduling request prohibit timer.

By performing the foregoing steps, the terminal device is configured with at least two logical channel scheduling request prohibit timers, and each SR configuration is associated with its respective logical channel scheduling request prohibit timer. If the SR configurations onto which the two logical channels are respectively mapped are the same, the two logical channels may affect stopping or running of a same logical channel scheduling request prohibit timer. If the SR configurations onto which the two logical channels are respectively mapped are different, one logical channel in the two logical channels may affect stopping or running of a logical channel scheduling request prohibit timer, and the other logical channel may affect stopping or running of another logical channel scheduling request prohibit timer. Using this method can avoid impact of the at least two SR configurations on a processing process of a logical channel scheduling request prohibit timer, thereby avoiding unnecessary triggering of the SR that is caused by improper stopping of the logical channel scheduling request prohibit timer.

According to a fifth aspect, an embodiment of the present invention provides a terminal device. The terminal device includes a processor, and the processor is configured to:
if data on a first logical channel of a terminal device triggers a buffer status report BSR, and the first logical channel is not configured with logical channel scheduling request prohibition:
   trigger a scheduling request SR in a running process of a logical channel scheduling request prohibit timer, and determine whether to send the SR

By performing the foregoing operations, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR may still be triggered without stopping the running logical channel scheduling request prohibit timer, thereby avoiding unnecessary triggering of the SR that is caused by stopping the logical channel scheduling request prohibit timer.

With reference to the fifth aspect, in a first implementable of the fifth aspect, the terminal device further includes a transceiver; the terminal device is configured with at least two SR configurations, and the first logical channel is mapped onto at least one SR configuration; and if the processor determines to send the SR, the processor is further configured to:
send, by the transceiver, the SR by using an SR configuration in the at least one SR configuration. That is, when there are at least two SR configurations, if the first logical channel is not configured with the logical channel scheduling request prohibition, the first logical channel may not be affected by the logical channel scheduling request prohibit timer, and the SR may still be triggered; and if the terminal device determines to send the SR, the terminal device may send the SR by using a resource in the SR configuration onto which the first logical channel is mapped.

According to a sixth aspect, an embodiment of the present invention provides a terminal device. The terminal device includes a processor, and the processor is configured to:
if data on a first logical channel of a terminal device triggers a buffer status report BSR, and the first logical channel is not configured with logical channel scheduling request prohibition, when a logical channel scheduling request prohibit timer is running:
   if an SR configuration onto which the first logical channel is mapped is different from an SR configuration onto which the second logical channel is mapped, trigger a scheduling request SR, and determine whether to send the SR; or
   if an SR configuration onto which the first logical channel is mapped is the same as an SR configuration onto which a second logical channel is mapped, stop, by the terminal device, the logical channel scheduling request prohibit timer, trigger a scheduling request SR, and determine whether to send the SR; where
   the second logical channel is a logical channel in which data triggers the buffer status report BSR and that is configured with the logical channel scheduling request prohibition.

By performing the foregoing operations, the terminal device determines, based on whether the SR configuration onto which the first logical channel is mapped is the same as the SR configuration onto which the second logical channel is mapped, whether the currently running logical channel scheduling request prohibit timer needs to be stopped before sending the SR, thereby avoiding unnecessary triggering of the SR that is caused by improper stopping of the logical channel scheduling request prohibit timer.

With reference to the sixth aspect, in a first possible implementation of the sixth aspect, a quantity of the second logical channels is at least two; and that the SR configuration onto which the first logical channel is mapped is different from the SR configuration onto which the second logical channel is mapped includes that:
the SR configuration onto which the first logical channel is mapped is different from an SR configuration onto which any one of the at least two second logical channels is mapped; or
the SR configuration onto which the first logical channel is mapped is different from an SR configuration onto which a second logical channel that is the last one in the at least two second logical channels triggers the buffer status report BSR is mapped; or
the SR configuration onto which the first logical channel is mapped is different from an SR configuration onto which a second logical channel that has a highest priority in the at least two second logical channels is mapped.

With reference to the sixth aspect, in a second possible implementation of the sixth aspect, the first logical channel is mapped onto at least two SR configurations; and that the SR configuration onto which the first logical channel is mapped is different from the SR configuration onto which the second logical channel is mapped includes that:
a first SR configuration is different from the SR configuration onto which the second logical channel is mapped, and the first SR configuration is an SR configuration that is in the at least two SR configurations onto which the first logical channel is mapped and that is associated with an indication parameter required by current to-be-transmitted data, where the indication parameter includes at least one of a transmission time interval TTI, a subcarrier spacing, and a cyclic prefix length; or
any one of the at least two SR configurations is different from the SR configuration onto which the second logical channel is mapped; or
the at least two SR configurations are all different from the SR configuration onto which the second logical channel is mapped.

According to a seventh aspect, an embodiment of the present invention provides a terminal device. The terminal device includes a processor, and the processor is configured to:
if data on a first logical channel of a terminal device triggers a buffer status report BSR, and the first logical channel is not configured with logical channel scheduling request prohibition, when a logical channel scheduling request prohibit timer is running:
   stop the logical channel scheduling request prohibit timer, trigger a scheduling request SR, map the first logical channel onto at least one SR configuration, and map a second logical channel onto at least one SR configuration, where
   the SR configuration onto which the first logical channel is mapped is used to send the SR; or
   an SR configuration onto which a logical channel that has a highest priority in the first logical channel and the second logical channel is mapped is used to send the SR; or
   an SR configuration in which a time location of a scheduling request resource is closest to a current time and that is of the SR configuration onto which the first logical channel is mapped and the SR configuration onto which the second logical channel is mapped is used to send the SR; or
   an SR configuration in which a time length of the scheduling request prohibit timer is the shortest and that is of the SR configuration onto which the first logical channel is mapped and the SR configuration onto which the second logical channel is mapped is used to send the SR; or
   an SR configuration whose quantity of maximum retransmission times of the scheduling request is the largest and that is of the SR configuration onto which the first logical channel is mapped and the SR configuration onto which the second logical channel is mapped is used to send the SR; where
   the second logical channel is a logical channel in which data triggers the buffer status report BSR and that is configured with the logical channel scheduling request prohibition.

By performing the foregoing operations, the SR configuration used by the triggered SR is an SR configuration that is selected from the at least two SR configurations based on a preset rule, so that the terminal device may select, based on a current SR sending requirement, an SR configuration that is most advantageous for sending the SR to send the SR, so as to enable the terminal device to obtain an uplink resource more quickly.

According to an eighth aspect, an embodiment of the present invention provides a terminal device. The terminal device includes a processor, and the processor is configured to:
if data on a first logical channel of a terminal device triggers a buffer status report BSR, the first logical channel is not configured with logical channel scheduling request prohibition, and an SR configuration onto which the first logical channel is mapped is a second SR configuration, when a logical channel scheduling request prohibit timer associated with the second SR configuration is running:
   stop the logical channel scheduling request prohibit timer associated with the second SR configuration, and trigger a scheduling request SR; where
   the terminal device is configured with at least two SR configurations, the at least two SR configurations include the second SR configuration, and each of the at least two SR configurations is associated with its respective logical channel scheduling request prohibit timer.

By performing the foregoing operations, the terminal device is configured with at least two logical channel scheduling request prohibit timers, and each SR configuration is associated with its respective logical channel scheduling request prohibit timer. If the SR configurations onto which the two logical channels are respectively mapped are the same, the two logical channels may affect stopping or running of a same logical channel scheduling request prohibit timer. If the SR configurations onto which the two logical channels are respectively mapped are different, one logical channel in the two logical channels may affect stopping or running of a logical channel scheduling request prohibit timer, and the other logical channel may affect stopping or running of another logical channel scheduling request prohibit timer. Using this method can avoid impact of the at least two SR configurations on a processing process of a logical channel scheduling request prohibit timer, thereby avoiding unnecessary triggering of the SR that is caused by improper stopping of the logical channel scheduling request prohibit timer.

According to a ninth aspect, an embodiment of the present invention provides a terminal device. The terminal device includes the method described in any one of the first aspect, the second aspect, the third aspect, and the fourth aspect, or the method described in any one of the possible implementations of the first aspect to the fourth aspect.

According to a tenth aspect, an embodiment of the present invention provides a system for sending a scheduling request. The system includes at least one processor, a memory, and an interface circuit. The memory, the interface circuit, and the at least one processor are connected to each other by using a line, and the at least one memory stores a program instruction; and when the program instruction is executed by the processor, the method described in any one of the first aspect, the second aspect, the third aspect, and the fourth aspect, or the method described in any one of the possible implementations of the first aspect to the fourth aspect is implemented.

According to an eleventh aspect, an embodiment of the present invention provides a computer readable storage medium. The computer readable storage medium stores a program instruction; and when the program instruction is executed by a processor, the method described in any one of the first aspect, the second aspect, the third aspect, and the fourth aspect, or the method described in any one of the possible implementations of the first aspect to the fourth aspect is implemented.

According to a twelfth aspect, an embodiment of the present invention provides a computer program product. When the computer program product is executed by a processor, the method described in any one of the first aspect, the second aspect, the third aspect, and the fourth aspect, or the method described in any one of the possible implementations of the first aspect to the fourth aspect is implemented.

By implementing the embodiments of the present invention, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR of the terminal device may still be triggered without stopping the running logical channel scheduling request prohibit timer, thereby avoiding unnecessary triggering of the SR that is caused by stopping the logical channel scheduling request prohibit timer.

### BRIEF DESCRIPTION OF DRAWINGS

The following describes the accompanying drawings used in the embodiments of the present invention.
FIG. 1 is a schematic structural diagram of a communications system according to an embodiment of the present invention;
FIG. 2 is a schematic flowchart of a scheduling request sending method according to an embodiment of the present invention;
FIG. 3 is a schematic flowchart of another scheduling request sending method according to an embodiment of the present invention;
FIG. 4 is a schematic flowchart of another scheduling request sending method according to an embodiment of the present invention;
FIG. 5 is a schematic flowchart of another scheduling request sending method according to an embodiment of the present invention;
FIG. 6 is a schematic structural diagram of a terminal device according to an embodiment of the present invention;
FIG. 7 is a schematic structural diagram of another terminal device according to an embodiment of the present invention;
FIG. 8 is a schematic structural diagram of another terminal device according to an embodiment of the present invention; and
FIG. 9 is a schematic structural diagram of another terminal device according to an embodiment of the present invention.

### DESCRIPTION OF EMBODIMENTS

The following describes the embodiments of the present invention with reference to the accompanying drawings in the embodiments of the present invention.

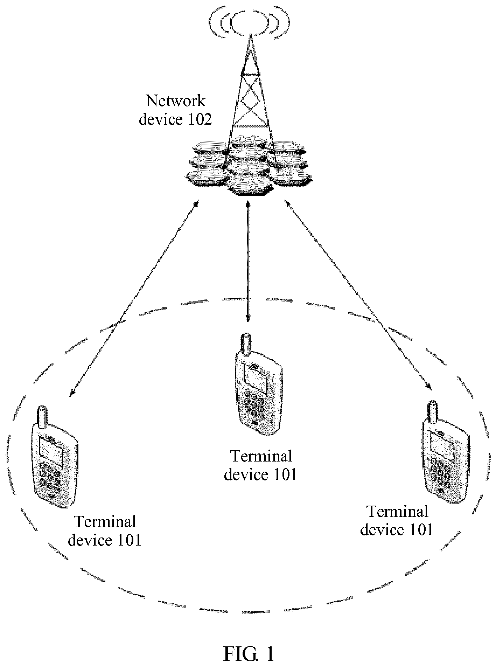

FIG. 1 is a schematic structural diagram of a communications system 10 according to an embodiment of the present invention. The communications system 10 includes a terminal device 101 and a network device 102. The terminal device 101 is a device on a user side (Three terminal devices are used as an example for illustration in FIG. 1, and one terminal device is used as an example for main description in subsequent embodiments), and the network device 102 is a device on a network side. Data sent by the terminal device 101 to the network device 102 is uplink data, and data sent by the network device 102 to the terminal device 101 is downlink data. An uplink resource (for example, a time-frequency resource) used by the terminal 102 for sending the uplink data is configured by the network device 102 in manners such as persistent scheduling, semi-persistent scheduling, and dynamic scheduling. In this embodiment of the present invention, a terminal device notifies, by using a buffer status report BSR, a network device (such as a base station) of an amount of uplink data that needs to be sent, so that the network device determines a quantity of uplink resources to be allocated to the terminal. The process may relate to triggering of SR and control of logical Channel SR-Prohibit Timer. Subsequently, related processes such as the triggering of the SR and the control of the logical Channel SR-Prohibit Timer are introduced based on the communications system shown in FIG. 1 with reference to the method embodiments.

Optionally, the terminal device 101 may include a handheld device having a wireless communication function (such as a mobile phone, a tablet computer, and a palm computer), an in-vehicle device (such as a car, a bicycle, an electric vehicle, an airplane, and a ship), a wearable device (such as a smartwatch (for example, a iWatch), a smart band and a pedometer), a smart household device (such as a refrigerator, a television, an air conditioner, and an electric meter), an intelligent robot, a workshop device, another processing device that can be connected to a wireless modem, and various forms of user equipments (User Equipment, UE), mobile stations (Mobile station, MS), terminals (terminal), and terminal devices (Terminal Equipment), and the like. The network device 102 may be a network side device, such as a base station, that is configured to receive data sent by the terminal 101. Optionally, a communications technology used by the communications system 10 may be a second generation mobile communications technology (The 2nd Generation, 2G), a third generation mobile communications technology (3rd-Generation, 3G), a Long Term Evolution (Long Term Evolution, LTE), a fourth generation mobile communications technology (4th-Generation, 4G), a fifth generation mobile communications technology (5th-Generation, 5G), another existing communications technology, another communications technology that is subsequently developed, or the like.

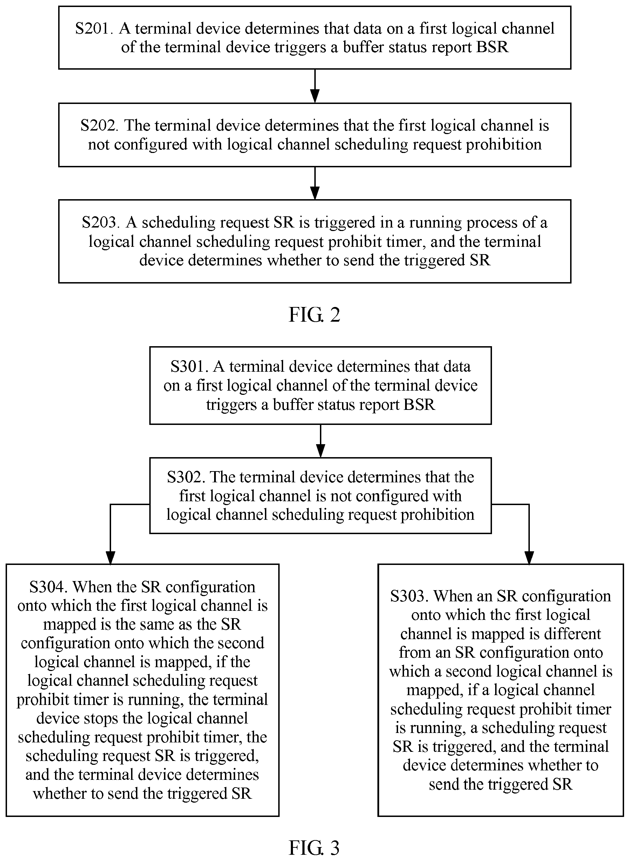

FIG. 2 is a scheduling request sending method according to an embodiment of the present invention. The method may be implemented based on the communications system shown in FIG. 1. The method includes but is not limited to the following steps.

Step S201: A terminal device determines that data on a first logical channel of the terminal device triggers a buffer status report BSR.

Specifically, the terminal device may include at least two logical channels, the first logical channel is one of the at least two logical channels, and that the data on the first logical channel triggers the buffer status report BSR may be understood as that: Data arrives at the first logical channel and no data exists on another logical channel, so that the terminal device is triggered to start a process of sending a regular buffer status report Regular BSR to a network device; or data of a high priority arrives at the first logical channel, so that the terminal device is triggered to start the process of sending the Regular BSR to the network device; or a buffer status report retransmission timer retxBSR-Timer expires, so that the terminal device is triggered to start the process of sending the Regular BSR to the network device. Triggering a buffer status report BSR and not triggering a buffer status report BSR are two different states, and the terminal device may sense or detect the states.

Step S202: The terminal device determines that the first logical channel is not configured with logical channel scheduling request prohibition.

Specifically, whether the logical channel scheduling request prohibition is configured is an attribute of a logical channel. If the terminal device is configured with a logical channel scheduling request prohibit timer, a logical channel of the terminal device may be further configured with the logical channel scheduling request prohibition, that is, may be configured with the logical channel scheduling request prohibition, or may not be configured with the logical channel scheduling request prohibition. In addition, that the logical channel is configured with the logical channel scheduling request prohibition may be understood as that the logical channel scheduling request prohibit timer is enabled for the logical channel, that is, when the triggered Regular BSR exists on the logical channel, an SR of the terminal device cannot be triggered immediately, and the SR may be triggered only after the logical channel scheduling request prohibit timer expires. Therefore, the terminal device may determine, based on attribute information preconfigured for the first logical channel, whether the first logical channel is configured with the logical channel scheduling request prohibition.

Step S203: A scheduling request SR is triggered in a running process of a logical channel scheduling request prohibit timer, and the terminal device determines whether to send the triggered SR.

Specifically, if another logical channel triggers the regular buffer status report Regular BSR before the first logical channel does, and the another logical channel is configured with the logical channel scheduling request prohibition, triggering of the regular buffer status report Regular BSR by the another logical channel may cause start or restart of the logical channel scheduling request prohibit timer, so that the logical channel scheduling request prohibit timer is in a running state. When the Regular BSR triggered by the another logical channel is cancelled, the logical channel scheduling request prohibit timer may stop running or may keep running. Whether the logical channel scheduling request prohibit timer is in a stopped state or in the running state is recorded in the terminal device, and therefore, the terminal device may learn whether the logical channel scheduling request prohibit timer is in the stopped state or in the running state.

In this embodiment of the present invention, when the terminal device determines that the data on the first logical channel of the terminal device triggers the buffer status report BSR, and determines that the first logical channel is not configured with the logical channel scheduling request prohibition, the SR may still be triggered even if the logical channel scheduling request prohibit timer is running, and the terminal device does not need to stop the logical channel scheduling request prohibit timer in the process of triggering the SR. The triggering of the SR on the logical channel that is not configured with the logical channel scheduling request prohibition is not affected by the logical channel scheduling request prohibit timer. Whether the SR on the logical channel can be triggered depends mainly on whether the logical channel scheduling request prohibition is configured. If the logical channel scheduling request prohibition is not configured, the SR can be triggered immediately; or if the logical channel scheduling request prohibition is configured, the SR cannot be triggered when the logical channel scheduling request prohibit timer is running.

Optionally, when the terminal device determines that the data on the first logical channel of the terminal device triggers the buffer status report BSR, and determines that the first logical channel is not configured with the logical channel scheduling request prohibition, if the logical channel scheduling request prohibit timer is not running, the SR may be triggered.

Optionally, when the terminal device determines that the data on the first logical channel of the terminal device triggers the buffer status report BSR, and determines that the first logical channel is not configured with the logical channel scheduling request prohibition, if the logical channel scheduling request prohibit timer is not running, the terminal device may start the logical channel scheduling request prohibit timer.

Optionally, when the terminal device determines that the data on the first logical channel of the terminal device triggers the buffer status report BSR, and determines that the first logical channel is not configured with the logical channel scheduling request prohibition, if the logical channel scheduling request prohibit timer is running, the terminal device may restart the logical channel scheduling request prohibit timer.

It should be noted that, that the scheduling request SR is triggered may be understood as that: The terminal device starts the process of sending the scheduling request SR to the network device, and the terminal device further determines whether the SR can be sent. In other words, if the SR is triggered, it is considered that the SR is suspended until the SR is canceled. When at least one SR is suspended, the terminal device further determines whether the SR can be sent.

After the SR is triggered, the terminal device determines whether to send the SR. For example, the terminal device determines whether an uplink control channel resource can be currently used; and if an uplink control channel resource can be currently used, the terminal device determines whether a measurement gap measurement gap or a sidelink discovery gap Sidelink Discovery Gap is currently configured. When the measurement gap measurement gap or the sidelink discovery gap Sidelink Discovery Gap is not currently configured, the terminal device determines whether a scheduling request prohibit timer sr-Prohibit Timer is running, and the terminal device determines whether a value of a scheduling request counter is less than a quantity of maximum retransmission times of the scheduling request; and if the scheduling request prohibit timer is not running, and the value of the scheduling request counter is less than the quantity of maximum retransmission times of the scheduling request, the terminal sends the SR.

In an optional solution, the terminal device includes at least two SR configurations, and each logical channel of the terminal device is mapped onto the respective SR configuration. For example, the at least two SR configurations include an SR configuration 1 and an SR configuration 2, and logical channels of the terminal device include a logical channel A and a logical channel B, where the logical channel A is mapped onto the SR configuration 1, the logical channel B is mapped onto the SR configuration 2, and a specific SR configuration onto which each logical channel is mapped may be preconfigured. In this optional solution, the first logical channel is mapped onto at least one SR configuration, for example, a logical channel C is mapped to an SR configuration 3 and an SR configuration 4. If the terminal device determines to send the SR, the terminal device sends the SR by using an SR configuration in the at least one SR configuration, that is, sends the SR by using an SR resource indicated by the SR configuration, for example, a time-frequency resource. For example, the logical channel C sends the SR by using the SR configuration 3 or SR configuration 4.

In another optional solution, the terminal device is configured with an SR configuration, and the first logical channel is mapped onto the SR configuration. If the terminal device determines to send the SR, the terminal device sends the SR by using the SR configuration, that is, sends the SR by using the SR resource indicated by the SR configuration, such as the time-frequency resource.

In the method described in FIG. 2, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR of the terminal device may still be triggered without stopping the running logical channel scheduling request prohibit timer, thereby avoiding unnecessary triggering of the SR that is caused by stopping the logical channel scheduling request prohibit timer.

FIG. 3 is a scheduling request sending method according to an embodiment of the present invention. The method may be implemented based on the communications system shown in FIG. 1. The method includes but is not limited to the following steps.

Step S301: A terminal device determines that data on a first logical channel of the terminal device triggers a buffer status report BSR.

Specifically, the terminal device may include at least two logical channels, the first logical channel is one of the at least two logical channels, and that the data on the first logical channel triggers the buffer status report BSR may be understood as that: Data arrives at the first logical channel and no data exists on another logical channel, so that the terminal device is triggered to start a process of sending a regular buffer status report Regular BSR to a network device; or data of a high priority arrives at the first logical channel, so that the terminal device is triggered to start the process of sending the Regular BSR to the network device; or a buffer status report retransmission timer retxBSR-Timer expires, so that the terminal device is triggered to start the process of sending the Regular BSR to the network device. Triggering a buffer status report BSR and not triggering a buffer status report BSR are two different states, and the terminal device may sense or detect the states.

Step S302: The terminal device determines that the first logical channel is not configured with logical channel scheduling request prohibition.

Specifically, whether the logical channel scheduling request prohibition is configured is an attribute of a logical channel. If the terminal device is configured with a logical channel scheduling request prohibit timer, a logical channel of the terminal device may be further configured with the logical channel scheduling request prohibition, that is, may be configured with the logical channel scheduling request prohibition, or may not be configured with the logical channel scheduling request prohibition. In addition, that the logical channel is configured with the logical channel scheduling request prohibition may be understood as that the logical channel scheduling request prohibit timer is enabled for the logical channel, that is, when the triggered Regular BSR exists on the logical channel, an SR of the terminal device cannot be triggered immediately, and the SR may be triggered only after the logical channel scheduling request prohibit timer expires. Therefore, the terminal device may determine, based on attribute information preconfigured for the first logical channel, whether the first logical channel is configured with the logical channel scheduling request prohibition.

Step S303: When an SR configuration onto which the first logical channel is mapped is different from an SR configuration onto which a second logical channel is mapped, if a logical channel scheduling request prohibit timer is running, a scheduling request SR is triggered, and the terminal device determines whether to send the triggered SR.

Specifically, the second logical channel is a logical channel in which data in the terminal device triggers the buffer status report BSR and that is configured with the logical channel scheduling request prohibition. The terminal device includes at least two logical channels, and each of the at least two logical channels may be mapped onto zero, one or at least two SR configurations. In this optional solution, the first logical channel is mapped onto at least one SR configuration. SR configurations onto which different logical channels are respectively mapped may be the same or may be different, and whether the SR configurations onto which the different logical channels are respectively mapped are the same may be determined.

In still another optional solution, a quantity of the second logical channels is at least two; and that the SR configuration onto which the first logical channel is mapped is different from the SR configuration onto which the second logical channel is mapped may specifically refer to the following cases:
the SR configuration onto which the first logical channel is mapped is different from an SR configuration onto which any one of the at least two second logical channels is mapped; or
the SR configuration onto which the first logical channel is mapped is different from an SR configuration onto which a second logical channel that is the last one in the at least two second logical channels triggers the buffer status report BSR is mapped; or
the SR configuration onto which the first logical channel is mapped is different from an SR configuration onto which a second logical channel that has a highest priority in the at least two second logical channels is mapped.

In still another optional solution, the first logical channel is mapped onto at least two SR configurations; and that the SR configuration onto which the first logical channel is mapped is different from the SR configuration onto which the second logical channel is mapped may specifically refer to the following cases:
a first SR configuration is different from the SR configuration onto which the second logical channel is mapped, and the first SR configuration is an SR configuration that is in the at least two SR configurations onto which the first logical channel is mapped and that is associated with an indication parameter required by current to-be-transmitted data, where the indication parameter includes at least one of a transmission time interval TTI, a subcarrier spacing, and a cyclic prefix length; or
any one of the at least two SR configurations is different from the SR configuration onto which the second logical channel is mapped; or
the at least two SR configurations are all different from the SR configuration onto which the second logical channel is mapped.

In still another optional solution, the quantity of the second logical channels is at least two, and the first logical channel and the second logical channel are both mapped onto at least two SR configurations. That the SR configuration onto which the first logical channel is mapped is different from the SR configuration onto which the second logical channel is mapped may specifically refer to the following cases:
the first SR configuration is different from an SR configuration that is in the at least two SR configurations onto which the second logical channel is mapped and that is associated with at least one of the indication parameter required by the current to-be-transmitted data and the transmission time interval TTI; or
any one of the at least two SR configurations is different from an SR configuration that is in the at least two SR configurations onto which the second logical channel is mapped and that is associated with at least one of the indication parameter required by the current to-be-transmitted data and the transmission time interval TTI; or
the at least two SR configurations are all different from an SR configuration that is in the at least two SR configurations onto which the second logical channel is mapped and that is associated with at least one of the indication parameter required by the current to-be-transmitted data and the transmission time interval TTI; or
any one of the at least two SR configurations is different from any one of the at least two SR configurations onto which the second logical channel is mapped; or
the at least two SR configurations are all different from any one of the at least two SR configurations onto which the second logical channel is mapped.

Further, if another logical channel triggers the regular buffer status report Regular BSR before the first logical channel does, and the another logical channel is configured with the logical channel scheduling request prohibition, triggering of the regular buffer status report Regular BSR by the another logical channel causes start or restart of the logical channel scheduling request prohibit timer, so that the logical channel scheduling request prohibit timer is in a running state. When the Regular BSR triggered by the another logical channel is cancelled, the logical channel scheduling request prohibit timer may stop running or may keep running. Whether the logical channel scheduling request prohibit timer is in a stopped state or in the running state is recorded in the terminal device, and therefore, the terminal device may learn whether the logical channel scheduling request prohibit timer is in the stopped state or in the running state.

That is, if the logical channel scheduling request prohibit timer is running, the scheduling request SR of the terminal device is triggered when the following conditions are met: the data on the first logical channel of the terminal device triggers the buffer status report BSR, the first logical channel is not configured with the logical channel scheduling request prohibition, and the SR configuration onto which the first logical channel is mapped is different from the SR configuration onto which the second logical channel is mapped.

It should be noted that, that the scheduling request SR is triggered may be understood as that: The terminal device starts the process of sending the scheduling request SR to the network device, and the terminal device further determines whether the SR can be sent. In other words, if the SR is triggered, it is considered that the SR is suspended until the SR is canceled. When at least one SR is suspended, the terminal device further determines whether the SR can be sent.

After the SR is triggered, the terminal device determines whether to send the SR. For example, the terminal device determines whether an uplink control channel resource can be currently used; and if an uplink control channel resource can be currently used, the terminal device determines whether a measurement gap measurement gap or a sidelink discovery gap Sidelink Discovery Gap is currently configured. When the measurement gap measurement gap or the sidelink discovery gap Sidelink Discovery Gap is not currently configured, the terminal device determines whether a scheduling request prohibit timer sr-Prohibit Timer is running, and the terminal device determines whether a value of a scheduling request counter is less than a quantity of maximum retransmission times of the scheduling request; and if the scheduling request prohibit timer is not running, and the value of the scheduling request counter is less than the quantity of maximum retransmission times of the scheduling request, the terminal sends the SR.

Step S304: When the SR configuration onto which the first logical channel is mapped is the same as the SR configuration onto which the second logical channel is mapped, if the logical channel scheduling request prohibit timer is running, the terminal device stops the logical channel scheduling request prohibit timer, the scheduling request SR is triggered, and the terminal device determines whether to send the triggered SR.

That is, if the logical channel scheduling request prohibit timer is running, the terminal device may first stop the logical channel scheduling request prohibit timer, and then the scheduling request SR of the terminal device is triggered when the following conditions are met: the data on the first logical channel of the terminal device triggers the buffer status report BSR, the first logical channel is not configured with the logical channel scheduling request prohibition, and the SR configuration onto which the first logical channel is mapped is different from the SR configuration onto which the second logical channel is mapped.

It should be noted that, that the scheduling request SR is triggered may be understood as that: The terminal device starts the process of sending the scheduling request SR to the network device, and the terminal device further determines whether the SR can be sent. In other words, if the SR is triggered, it is considered that the SR is suspended until the SR is canceled. When at least one SR is suspended, the terminal device further determines whether the SR can be sent.

After the SR is triggered, the terminal device determines whether to send the SR. For example, the terminal device determines whether an uplink control channel resource can be currently used; and if an uplink control channel resource can be currently used, the terminal device determines whether a measurement gap measurement gap or a sidelink discovery gap Sidelink Discovery Gap is currently configured. When the measurement gap measurement gap or the sidelink discovery gap Sidelink Discovery Gap is not currently configured, the terminal device determines whether a scheduling request prohibit timer sr-Prohibit Timer is running, and the terminal device determines whether a value of a scheduling request counter is less than a quantity of maximum retransmission times of the scheduling request; and if the scheduling request prohibit timer is not running, and the value of the scheduling request counter is less than the quantity of maximum retransmission times of the scheduling request, the terminal sends the SR.

In the method shown in FIG. 3, the terminal device determines, based on whether the SR configuration onto which the first logical channel is mapped is the same as the SR configuration onto which the second logical channel is mapped, whether the currently running logical channel scheduling request prohibit timer needs to be stopped before sending the SR, thereby avoiding unnecessary triggering of the SR that is caused by improper stopping of the logical channel scheduling request prohibit timer.

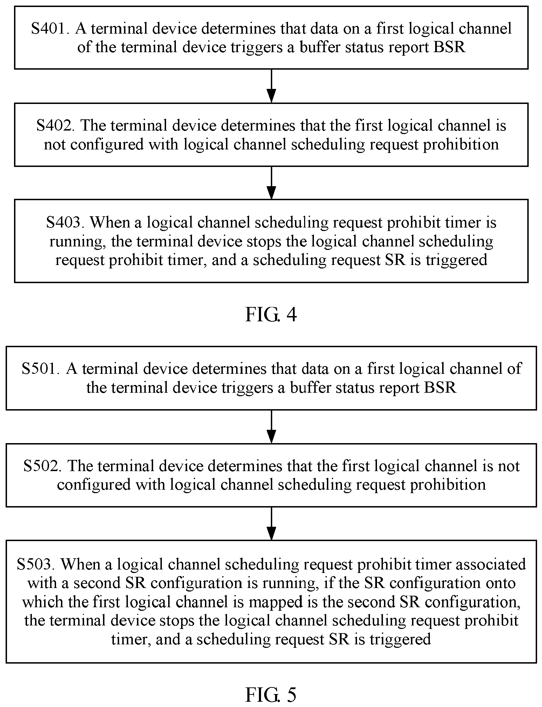

FIG. 4 is a scheduling request sending method according to an embodiment of the present invention. The method may be implemented based on the communications system shown in FIG. 1. The method includes but is not limited to the following steps.

Step S401: A terminal device determines that data on a first logical channel of the terminal device triggers a buffer status report BSR.

Specifically, the terminal device may include at least two logical channels, the first logical channel is one of the at least two logical channels, and that the data on the first logical channel triggers the buffer status report BSR may be understood as that: Data arrives at the first logical channel and no data exists on another logical channel, so that the terminal device is triggered to start a process of sending a regular buffer status report Regular BSR to a network device; or data of a high priority arrives at the first logical channel, so that the terminal device is triggered to start the process of sending the Regular BSR to the network device; or a buffer status report retransmission timer retxBSR-Timer expires, so that the terminal device is triggered to start the process of sending the Regular BSR to the network device. Triggering a buffer status report BSR and not triggering a buffer status report BSR are two different states, and the terminal device may sense or detect the states.

Step S402: The terminal device determines that the first logical channel is not configured with logical channel scheduling request prohibition.

Specifically, whether the logical channel scheduling request prohibition is configured is an attribute of a logical channel. If the terminal device is configured with a logical channel scheduling request prohibit timer, a logical channel of the terminal device may be further configured with the logical channel scheduling request prohibition, that is, may be configured with the logical channel scheduling request prohibition, or may not be configured with the logical channel scheduling request prohibition. In addition, that the logical channel is configured with the logical channel scheduling request prohibition may be understood as that the logical channel scheduling request prohibit timer is enabled for the logical channel, that is, when the triggered Regular BSR exists on the logical channel, an SR of the terminal device cannot be triggered immediately, and the SR may be triggered only after the logical channel scheduling request prohibit timer expires. Therefore, the terminal device may determine, based on attribute information preconfigured for the first logical channel, whether the first logical channel is configured with the logical channel scheduling request prohibition.

Step S403: When a logical channel scheduling request prohibit timer is running, the terminal device stops the logical channel scheduling request prohibit timer, and a scheduling request SR is triggered.

Specifically, the first logical channel is mapped onto at least one SR configuration, and the second logical channel is mapped onto at least one SR configuration, where
the SR configuration onto which the first logical channel is mapped is used to send the SR; or
an SR configuration onto which a logical channel that has a highest priority in the first logical channel and the second logical channel is mapped is used to send the SR; or
an SR configuration in which a time location of a scheduling request resource is closest to a current time and that is of the SR configuration onto which the first logical channel is mapped and the SR configuration onto which the second logical channel is mapped is used to send the SR; or
an SR configuration in which a time length of the scheduling request prohibit timer is the shortest and that is of the SR configuration onto which the first logical channel is mapped and the SR configuration onto which the second logical channel is mapped is used to send the SR; or
an SR configuration whose quantity of maximum retransmission times of the scheduling request is the largest and that is of the SR configuration onto which the first logical channel is mapped and the SR configuration onto which the second logical channel is mapped is used to send the SR.

It should be noted that, that the scheduling request SR is triggered may be understood as that: The terminal device starts the process of sending the scheduling request SR to the network device, and the terminal device further determines whether the SR can be sent. In other words, if the SR is triggered, it is considered that the SR is suspended until the SR is canceled. When at least one SR is suspended, the terminal device further determines whether the SR can be sent. In addition, that the SR configuration is used to send the SR may be understood as that: An SR resource indicated by the SR configuration, for example, a time-frequency resource, is used to send the SR.

After the scheduling request SR is triggered, the terminal device determines whether to send the SR. For example, the terminal device determines whether an uplink control channel resource can be currently used; and if the uplink control channel resource can be currently used, the terminal device determines whether a measurement gap measurement gap or a sidelink discovery gap Sidelink Discovery Gap is currently configured. When the measurement gap measurement gap or the sidelink discovery gap Sidelink Discovery Gap is not currently configured, the terminal device determines whether a scheduling request prohibit timer sr-Prohibit Timer is running, and the terminal device determines whether a value of a scheduling request counter is less than the quantity of maximum retransmission times of the scheduling request; and if the scheduling request prohibit timer is not running, and the value of the scheduling request counter is less than the quantity of maximum retransmission times of the scheduling request, the terminal sends the SR.

In the method shown in FIG. 4, the SR configuration used by the triggered SR is an SR configuration selected from the at least two SR configurations based on a preset rule, so that the terminal device may select, based on a current SR sending requirement, an SR configuration that is most advantageous for sending the SR to send the SR, so as to enable the terminal device to obtain an uplink resource more quickly.

FIG. 5 is a scheduling request sending method according to an embodiment of the present invention. The method may be implemented based on the communications system shown in FIG. 1. The method includes but is not limited to the following steps.

Step S501: A terminal device determines that data on a first logical channel of the terminal device triggers a buffer status report BSR.

Specifically, the terminal device may include at least two logical channels, the first logical channel is one of the at least two logical channels, and that the data on the first logical channel triggers the buffer status report BSR may be understood as that: Data arrives at the first logical channel and no data exists on another logical channel, so that the terminal device is triggered to start a process of sending a regular buffer status report Regular BSR to a network device; or data of a high priority arrives at the first logical channel, so that the terminal device is triggered to start the process of sending the Regular BSR to the network device; or a buffer status report retransmission timer retxBSR-Timer expires, so that the terminal device is triggered to start the process of sending the Regular BSR to the network device. Triggering a buffer status report BSR and not triggering a buffer status report BSR are two different states, and the terminal device may sense or detect the states.

Step S502: The terminal device determines that the first logical channel is not configured with logical channel scheduling request prohibition.

Specifically, whether the logical channel scheduling request prohibition is configured is an attribute of a logical channel. If the terminal device is configured with a logical channel scheduling request prohibit timer, a logical channel of the terminal device may be further configured with the logical channel scheduling request prohibition, that is, may be configured with the logical channel scheduling request prohibition, or may not be configured with the logical channel scheduling request prohibition. In addition, that the logical channel is configured with the logical channel scheduling request prohibition may be understood as that the logical channel scheduling request prohibit timer is enabled for the logical channel, that is, when the triggered Regular BSR exists on the logical channel, an SR of the terminal device cannot be triggered immediately, and the SR may be triggered only after the logical channel scheduling request prohibit timer expires. Therefore, the terminal device may determine, based on attribute information preconfigured for the first logical channel, whether the first logical channel is configured with the logical channel scheduling request prohibition.

Step S503: When a logical channel scheduling request prohibit timer associated with a second SR configuration is running, if the SR configuration onto which the first logical channel is mapped is the second SR configuration, the terminal device stops the logical channel scheduling request prohibit timer, and a scheduling request SR is triggered.

Specifically, the terminal device is configured with at least two SR configurations, the at least two SR configurations include the second SR configuration, and each of the at least two SR configurations is associated with its respective logical channel scheduling request prohibit timer. That is, the terminal device is configured with at least two logical channel scheduling request prohibit timers, and each SR configuration maintains its respective logical channel scheduling request prohibit timer. Therefore, at least two logical channel scheduling request prohibit timers may be running. In addition, the terminal device has at least two logical channels, and each of the at least two logical channels may be mapped onto zero, one or at least two SR configurations. If the SR configurations onto which the two logical channels are respectively mapped are the same, the two logical channels may affect stopping or running of a same logical channel scheduling request prohibit timer. If the SR configurations onto which the two logical channels are respectively mapped are different, one logical channel in the two logical channels may affect stopping or running of a logical channel scheduling request prohibit timer, where the logical channel scheduling request prohibit timer is a logical channel scheduling request prohibit timer associated with an SR configuration onto which the logical channel is mapped; and the other logical channel in the two logical channels may affect stopping or running of another logical channel scheduling request prohibit timer, where the other logical channel scheduling request prohibit timer is a logical channel scheduling request prohibit timer associated with an SR configuration onto which the another logical channel is mapped.

Therefore, when the logical channel scheduling request prohibit timer associated with the second SR configuration is running, and the SR configuration onto which the first logical channel is mapped is the second SR configuration, the terminal device needs to first stop the logical channel scheduling request prohibit timer associated with the second SR configuration, and then the scheduling request SR is triggered.

It should be noted that, that the scheduling request SR is triggered may be understood as that: The terminal device starts the process of sending the scheduling request SR to the network device, and the terminal device further determines whether the SR can be sent. In other words, if the SR is triggered, it is considered that the SR is suspended until the SR is canceled. When at least one SR is suspended, the terminal device further determines whether the SR can be sent.

After the scheduling request SR is triggered, the terminal device may determine whether to send the SR. For example, the terminal device determines whether an uplink control channel resource can be currently used; and if the uplink control channel resource can be currently used, the terminal device determines whether a measurement gap measurement gap or a sidelink discovery gap Sidelink Discovery Gap is currently configured. When the measurement gap measurement gap or the sidelink discovery gap Sidelink Discovery Gap is not currently configured, the terminal device determines whether a scheduling request prohibit timer sr-Prohibit Timer is running, and the terminal device determines whether a value of a scheduling request counter is less than a quantity of maximum retransmission times of the scheduling request; and if the scheduling request prohibit timer is not running, and the value of the scheduling request counter is less than the quantity of maximum retransmission times of the scheduling request, the terminal sends the SR.

In the method described in FIG. 5, the terminal device is configured with at least two logical channel scheduling request prohibit timers, and each SR configuration is associated with its respective logical channel scheduling request prohibit timer. If the SR configurations onto which the two logical channels are respectively mapped are the same, the two logical channels may affect stopping or running of a same logical channel scheduling request prohibit timer. If the SR configurations onto which the two logical channels are respectively mapped are different, one logical channel in the two logical channels may affect stopping or running of a logical channel scheduling request prohibit timer, and the other logical channel may affect stopping or running of another logical channel scheduling request prohibit timer. Using this method can avoid impact of the at least two SR configurations on a processing process of a logical channel scheduling request prohibit timer, thereby avoiding unnecessary triggering of the SR that is caused by improper stopping of the logical channel scheduling request prohibit timer.

The foregoing has described in detail the methods in the embodiments of the present invention. The following provides an apparatus in an embodiment of the present invention.

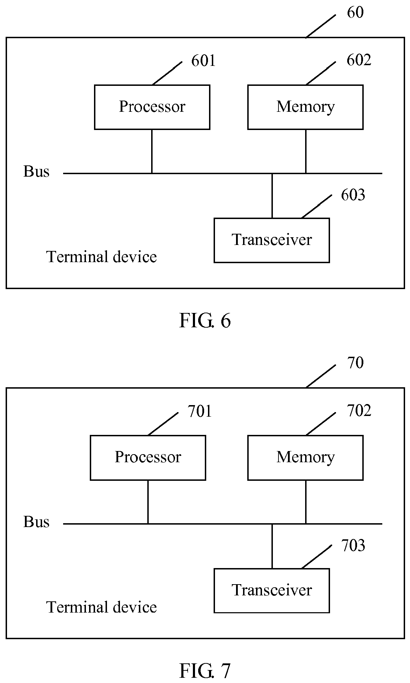

FIG. 6 shows a terminal device 60 according to an embodiment of the present invention. The terminal device 60 includes a processor 601 and a memory 602, and the terminal device 60 may further include a transceiver 603. The processor 601, the memory 602, and the transceiver 603 (if included) are connected to each other by using a bus.

The memory 602 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 602 is configured to store a related program instruction and related data. The transceiver 603 is configured to receive and send data.

The processor 601 may be one or more central processing units (central processing unit, CPU). When the processor 601 is one CPU, the CPU may be a single-core CPU, or may be a multi-core CPU.

The processor 601 in the terminal device 60 is configured to read the program instruction stored in the memory 602 to perform the following operation:
if data on a first logical channel of a terminal device triggers a buffer status report BSR, and the first logical channel is not configured with logical channel scheduling request prohibition:
   triggering a scheduling request SR in a running process of a logical channel scheduling request prohibit timer, and determining whether to send the SR.

By performing the foregoing operations, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR of the terminal device may still be triggered without stopping the running logical channel scheduling request prohibit timer, thereby avoiding unnecessary triggering of the SR that is caused by stopping the logical channel scheduling request prohibit timer.

In still another optional solution, the terminal device further includes the transceiver; the terminal device is configured with at least two SR configurations, and the first logical channel is mapped onto at least one SR configuration. If the processor determines to send the SR, the processor is further configured to send, by the transceiver, the SR by using one SR configuration in the at least one SR configuration. That is, when there are at least two SR configurations, if the first logical channel is not configured with the logical channel scheduling request prohibition, the first logical channel may not be affected by the logical channel scheduling request prohibit timer, and the terminal device may also send the SR by using a resource in the SR configuration onto which the first logical channel is mapped.

It should be noted that, for implementation of each operation, refer to corresponding descriptions in the method embodiment shown in FIG. 2.

It should be noted that, the processor 601 may perform the foregoing operations without relying on the program instruction, but implements the foregoing operations by using a circuit.

In the terminal device 60 described in FIG. 6, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR of the terminal device may still be triggered without stopping the running logical channel scheduling request prohibit timer, thereby avoiding unnecessary triggering of the SR that is caused by stopping the logical channel scheduling request prohibit timer.

FIG. 7 shows a terminal device 70 according to an embodiment of the present invention. The terminal device 70 includes a processor 701 and a memory 702, and the terminal device 70 may further include a transceiver 703. The processor 701, the memory 702, and the transceiver 703 (if included) are connected to each other by using a bus.

The memory 702 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 702 is configured to store a related program instruction and related data. The transceiver 703 is configured to receive and send data.

The processor 701 may be one or more central processing units (central processing unit, CPU). When the processor 701 is one CPU, the CPU may be a single-core CPU, or may be a multi-core CPU.

The processor 701 in the terminal device 70 is configured to read the program instruction stored in the memory 702 to perform the following operation:
if data on a first logical channel of a terminal device triggers a buffer status report BSR, and the first logical channel is not configured with logical channel scheduling request prohibition, when a logical channel scheduling request prohibit timer is running:
   if an SR configuration onto which the first logical channel is mapped is different from an SR configuration onto which the second logical channel is mapped, triggering a scheduling request SR, and determining whether to send the SR; or
   if an SR configuration onto which the first logical channel is mapped is the same as an SR configuration onto which a second logical channel is mapped, stopping, by the terminal device, the logical channel scheduling request prohibit timer, triggering a scheduling request SR, and determining whether to send the SR; where
   the second logical channel is a logical channel in which data triggers the buffer status report BSR and that is configured with the logical channel scheduling request prohibition.

By performing the foregoing operations, the terminal device determines, based on whether the SR configuration onto which the first logical channel is mapped is the same as the SR configuration onto which the second logical channel is mapped, whether the currently running logical channel scheduling request prohibit timer needs to be stopped before sending the SR, thereby avoiding unnecessary triggering of the SR that is caused by improper stopping of the logical channel scheduling request prohibit timer.

In still another optional solution, a quantity of the second logical channels is at least two; and that the SR configuration onto which the first logical channel is mapped is different from the SR configuration onto which the second logical channel is mapped includes that:
the SR configuration onto which the first logical channel is mapped is different from an SR configuration onto which any one of the at least two second logical channels is mapped; or
the SR configuration onto which the first logical channel is mapped is different from an SR configuration onto which a second logical channel that is the last one in the at least two second logical channels triggers the buffer status report BSR is mapped; or
the SR configuration onto which the first logical channel is mapped is different from an SR configuration onto which a second logical channel that has a highest priority in the at least two second logical channels is mapped.

In still another optional solution, the first logical channel is mapped onto at least two SR configurations; and that the SR configuration onto which the first logical channel is mapped is different from the SR configuration onto which the second logical channel is mapped includes that:
a first SR configuration is different from the SR configuration onto which the second logical channel is mapped, and the first SR configuration is an SR configuration that is in the at least two SR configurations onto which the first logical channel is mapped and that is associated with an indication parameter required by current to-be-transmitted data, where the indication parameter includes at least one of a transmission time interval TTI, a subcarrier spacing, and a cyclic prefix length; or
any one of the at least two SR configurations is different from the SR configuration onto which the second logical channel is mapped; or
the at least two SR configurations are all different from the SR configuration onto which the second logical channel is mapped.

It should be noted that, for implementation of each operation, refer to corresponding descriptions in the method embodiment shown in FIG. 3.

It should be noted that the processor 701 may perform the foregoing operations without relying on the program instruction, but implements the foregoing operations by using a circuit.

In the terminal device 70 shown in FIG. 7, the terminal device determines, based on whether the SR configuration onto which the first logical channel is mapped is the same as the SR configuration onto which the second logical channel is mapped, whether the currently running logical channel scheduling request prohibit timer needs to be stopped before sending the SR, thereby avoiding unnecessary triggering of the SR that is caused by improper stopping of the logical channel scheduling request prohibit timer.

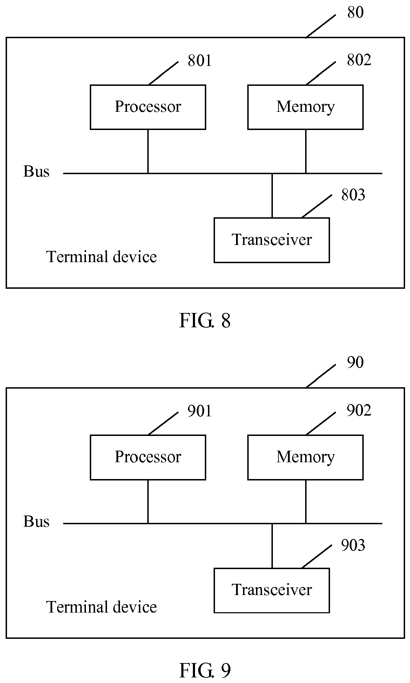

FIG. 8 shows a terminal device 80 according to an embodiment of the present invention. The terminal device 80 includes a processor 801 and a memory 802, and the terminal device 80 may further include a transceiver 803. The processor 801, the memory 802, and the transceiver 803 (if included) are connected to each other by using a bus.

The memory 802 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related program instruction and related data. The transceiver 803 is configured to receive and send data.

The processor 801 may be one or more central processing units (central processing unit, CPU). When the processor 801 is one CPU, the CPU may be a single-core CPU, or may be a multi-core CPU.

The processor 801 in the terminal device 80 is configured to read the program instruction stored in the memory 802 to perform the following operation:
if data on a first logical channel of a terminal device triggers a buffer status report BSR, and the first logical channel is not configured with logical channel scheduling request prohibition, when a logical channel scheduling request prohibit timer is running:
   stopping the logical channel scheduling request prohibit timer, triggering a scheduling request SR, mapping the first logical channel onto at least one SR configuration, and mapping a second logical channel onto at least one SR configuration, where
   the SR configuration onto which the first logical channel is mapped is used to send the SR; or
   an SR configuration onto which a logical channel that has a highest priority in the first logical channel and the second logical channel is mapped is used to send the SR; or
   an SR configuration in which a time location of a scheduling request resource is closest to a current time and that is of the SR configuration onto which the first logical channel is mapped and the SR configuration onto which the second logical channel is mapped is used to send the SR; or
   an SR configuration in which a time length of the scheduling request prohibit timer is the shortest and that is of the SR configuration onto which the first logical channel is mapped and the SR configuration onto which the second logical channel is mapped is used to send the SR; or
   an SR configuration whose quantity of maximum retransmission times of the scheduling request is the largest and that is of the SR configuration onto which the first logical channel is mapped and the SR configuration onto which the second logical channel is mapped is used to send the SR; where
   the second logical channel is a logical channel in which data triggers the buffer status report BSR and that is configured with the logical channel scheduling request prohibition.

It should be noted that, for implementation of each operation, refer to corresponding descriptions in the method embodiment shown in FIG. 4.

It should be noted that the processor 801 may perform the foregoing operations without relying on the program instruction, but implements the foregoing operations by using a circuit.

In the terminal device 80 described in FIG. 8, an SR configuration used by the triggered SR is an SR configuration selected from the at least two SR configurations based on a preset rule, so that the terminal device may select, based on a current SR sending requirement, an SR configuration that is most advantageous for sending the SR to send the SR, so as to enable the terminal device to obtain an uplink resource more quickly.

FIG. 9 shows a terminal device 90 according to an embodiment of the present invention. The terminal device 90 includes a processor 901 and a memory 902, and the terminal device 90 may further include a transceiver 903. The processor 901, the memory 902, and the transceiver 903 (if included) are connected to each other by using a bus.

The memory 902 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 902 is configured to store a related program instruction and related data. The transceiver 903 is configured to receive and send data.

The processor 901 may be one or more central processing units (central processing unit, CPU). When the processor 901 is one CPU, the CPU may be a single-core CPU, or may be a multi-core CPU.

The processor 901 in the terminal device 90 is configured to read the program instruction stored in the memory 902 to perform the following operations: If data on a first logical channel of a terminal device triggers a buffer status report BSR, the first logical channel is not configured with logical channel scheduling request prohibition, and an SR configuration onto which the first logical channel is mapped is a second SR configuration, when a logical channel scheduling request prohibit timer associated with the second SR configuration is running:
stopping the logical channel scheduling request prohibit timer associated with the second SR configuration, and triggering a scheduling request SR; where
the terminal device is configured with at least two SR configurations, the at least two SR configurations include the second SR configuration, and each of the at least two SR configurations is associated with its respective logical channel scheduling request prohibit timer.

It should be noted that, for implementation of each operation, refer to corresponding descriptions in the method embodiment shown in FIG. 5.

It should be noted that the processor 801 may perform the foregoing operations without relying on the program instruction, but implements the foregoing operations by using a circuit.

In the terminal device 90 described in FIG. 9, the terminal device is configured with at least two logical channel scheduling request prohibit timers, and each SR configuration is associated with its respective logical channel scheduling request prohibit timer. If the SR configurations onto which the two logical channels are respectively mapped are the same, the two logical channels may affect stopping or running of a same associated logical channel scheduling request prohibit timer. If the SR configurations onto which the two logical channels are respectively mapped are different, one logical channel in the two logical channels may affect stopping or running of a logical channel scheduling request prohibit timer, and the other logical channel may affect stopping or running of another logical channel scheduling request prohibit timer. Using this method can avoid impact of the at least two SR configurations on a processing process of a logical channel scheduling request prohibit timer, thereby avoiding unnecessary triggering of the SR that is caused by improper stopping of the logical channel scheduling request prohibit timer.

An embodiment of the present invention further provides a terminal device. The terminal device includes a unit that is configured to implement the method embodiment shown in FIG. 2, or the method embodiment shown in FIG. 3, or the method embodiment shown in FIG. 4, or the method embodiment shown in FIG. 5.

An embodiment of the present invention further provides a system for sending a scheduling request, where the system includes at least one processor, a memory, and an interface circuit. The memory, the interface circuit, and the at least one processor are connected to each other by using a line, and the at least one memory stores a program instruction. When the program instruction is executed by the processor, the method embodiment shown in FIG. 2, or the method embodiment shown in FIG. 3, or the method embodiment shown in FIG. 4, or the method embodiment shown in FIG. 5 is implemented.

An embodiment of the present invention further provides a computer readable storage medium, where the computer readable storage medium stores a program instruction. When the program instruction is executed by the processor, the method embodiment shown in FIG. 2, or the method embodiment shown in FIG. 3, or the method embodiment shown in FIG. 4, or the method embodiment shown in FIG. 5 is implemented.

An embodiment of the present invention further provides a computer readable storage medium, where the computer readable storage medium stores a program instruction. When the program instruction is executed by the processor, the method embodiment shown in FIG. 2, or the method embodiment shown in FIG. 3, or the method embodiment shown in FIG. 4, or the method embodiment shown in FIG. 5 is implemented.

By implementing the embodiments of the present invention, when the terminal device determines that the data on the first logical channel of the terminal device triggers the buffer status report BSR, and determines that the first logical channel is not configured with the logical channel scheduling request prohibition, if the logical channel scheduling request prohibit timer is running, the SR of the terminal device may still be triggered without stopping the running logical channel scheduling request prohibit timer, thereby avoiding unnecessary triggering of the SR that is caused by stopping the logical channel scheduling request prohibit timer.

A person of ordinary skill in the art may understand that all or some of the processes of the methods in the embodiments may be implemented by a computer program instructing related hardware. The program may be stored in a computer readable storage medium. When the program runs, the processes of the methods in the embodiments are performed. The foregoing storage medium includes: any medium that can store program code, such as a ROM, a RAM, a magnetic disk, or an optical disc.

## Claims

1. A scheduling request sending method, comprising:
if data on a first logical channel of a terminal device triggers a buffer status report BSR, (S201) and the first logical channel is not configured with logical channel scheduling request prohibition (S202):
triggering (S203) a scheduling request SR in a running process of a logical channel scheduling request prohibit timer, and determining, by the terminal device, whether to send the SR.

2. The method according to claim 1, wherein the terminal device is configured with at least two SR configurations, and the first logical channel is mapped onto at least one SR configuration; and if the terminal device determines to send the SR, the method further comprises:
sending, by the terminal device, the SR by using an SR configuration in the at least one SR configuration.

3. A scheduling request sending method, comprising:
if data on a first logical channel of a terminal device triggers a buffer status report BSR, (S301) and the first logical channel is not configured with logical channel scheduling request prohibition (S302), when a logical channel scheduling request prohibit timer is running:
if (S303) an SR configuration onto which the first logical channel is mapped is different from an SR configuration onto which a second logical channel is mapped, triggering a scheduling request SR, and determining, by the terminal device, whether to send the SR; or
if (S304) an SR configuration onto which the first logical channel is mapped is the same as an SR configuration onto which a second logical channel is mapped, stopping, by the terminal device, the logical channel scheduling request prohibit timer, triggering a scheduling request SR, and determining, by the terminal device, whether to send the SR; wherein
the second logical channel is a logical channel in which data triggers the buffer status report BSR and that is configured with the logical channel scheduling request prohibition.

4. The method according to claim 3, wherein a quantity of the second logical channel is at least two, and that the SR configuration onto which the first logical channel is mapped is different from the SR configuration onto which the second logical channel is mapped comprises that:
the SR configuration onto which the first logical channel is mapped is different from an SR configuration onto which any one of the at least two second logical channels is mapped; or
the SR configuration onto which the first logical channel is mapped is different from an SR configuration onto which a second logical channel that is the last one in the at least two second logical channels triggers the buffer status report BSR is mapped; or
the SR configuration onto which the first logical channel is mapped is different from an SR configuration onto which a second logical channel that has a highest priority in the at least two second logical channels is mapped.

5. The method according to claim 3, wherein the first logical channel is mapped onto at least two SR configurations, and that the SR configuration onto which the first logical channel is mapped is different from the SR configuration onto which the second logical channel is mapped comprises that:
a first SR configuration is different from the SR configuration onto which the second logical channel is mapped, and the first SR configuration is an SR configuration that is in the at least two SR configurations onto which the first logical channel is mapped and that is associated with an indication parameter required by current to-be-transmitted data, wherein the indication parameter comprises at least one of a transmission time interval TTI, a subcarrier spacing, and a cyclic prefix length; or
any one of the at least two SR configurations is different from the SR configuration onto which the second logical channel is mapped; or
the at least two SR configurations are all different from the SR configuration onto which the second logical channel is mapped.

6. A scheduling request sending method, comprising:
if data on a first logical channel of a terminal device triggers a buffer status report BSR, (S401) and the first logical channel is not configured with logical channel scheduling request prohibition (S402), when (S403) a logical channel scheduling request prohibit timer is running:
stopping (S403), by the terminal device, the logical channel scheduling request prohibit timer, triggering a scheduling request SR, mapping the first logical channel onto at least one SR configuration, and mapping a second logical channel onto at least one SR configuration, wherein
the SR configuration onto which the first logical channel is mapped is used to send the SR; or
an SR configuration onto which a logical channel that has a highest priority in the first logical channel and the second logical channel is mapped is used to send the SR; or
an SR configuration in which a time location of a scheduling request resource is closest to a current time and that is of the SR configuration onto which the first logical channel is mapped and the SR configuration onto which the second logical channel is mapped is used to send the SR; or
an SR configuration in which a time length of the scheduling request prohibit timer is the shortest and that is of the SR configuration onto which the first logical channel is mapped and the SR configuration onto which the second logical channel is mapped is used to send the SR; or
an SR configuration whose quantity of maximum retransmission times of the scheduling request is the largest and that is of the SR configuration onto which the first logical channel is mapped and the SR configuration onto which the second logical channel is mapped is used to send the SR; wherein
the second logical channel is a logical channel in which data triggers the buffer status report BSR and that is configured with the logical channel scheduling request prohibition.

7. A scheduling request sending method, comprising:
if (S501) data on a first logical channel of a terminal device triggers a buffer status report BSR, the first logical channel is not configured with logical channel scheduling request prohibition (S502), and an SR configuration onto which the first logical channel is mapped is a second SR configuration, when (S503) a logical channel scheduling request prohibit timer associated with the second SR configuration is running:
stopping (S503), by the terminal device, the logical channel scheduling request prohibit timer associated with the second SR configuration, and triggering a scheduling request SR; wherein
the terminal device is configured with at least two SR configurations, the at least two SR configurations comprise the second SR configuration, and each of the at least two SR configurations is associated with its respective logical channel scheduling request prohibit timer.

8. A terminal device (60), wherein the terminal device comprises a processor (601), and the processor (601) is configured to:
if data on a first logical channel of a terminal device triggers a buffer status report BSR (S201), and the first logical channel is not configured with logical channel scheduling request prohibition (S202):
trigger (S203) a scheduling request SR in a running process of a logical channel scheduling request prohibit timer, and determine whether to send the SR.

9. The terminal device according to claim 8, wherein the terminal device further comprises a transceiver; the terminal device is configured with at least two SR configurations, and the first logical channel is mapped onto at least one SR configuration; and if the processor determines to send the SR, the processor is further configured to:
send, by the transceiver, the SR by using an SR configuration in the at least one SR configuration.

10. A terminal device (70), wherein the terminal device comprises a processor (701), and the processor (701) is configured to:
if data on a first logical channel of a terminal device triggers a buffer status report BSR, (S301) and the first logical channel is not configured with logical channel scheduling request prohibition (S302), when a logical channel scheduling request prohibit timer is running:
if (S303) an SR configuration onto which the first logical channel is mapped is different from an SR configuration onto which the second logical channel is mapped, trigger a scheduling request SR, and determine whether to send the SR; or
if (S304) an SR configuration onto which the first logical channel is mapped is the same as an SR configuration onto which the second logical channel is mapped, stop, by the terminal device, the logical channel scheduling request prohibit timer, trigger a scheduling request SR, and determine whether to send the SR; wherein
the second logical channel is a logical channel in which data triggers the buffer status report BSR and that is configured with the logical channel scheduling request prohibition.

11. A terminal device (80), wherein the terminal device comprises a processor (801), and the processor (801) is configured to:
if data on a first logical channel of a terminal device triggers a buffer status report BSR, (401) and the first logical channel is not configured with logical channel scheduling request prohibition (402), when (403) a logical channel scheduling request prohibit timer is running:
stop (S403) the logical channel scheduling request prohibit timer, trigger a scheduling request SR, map the first logical channel onto at least one SR configuration, and map a second logical channel onto at least one SR configuration, wherein
the SR configuration onto which the first logical channel is mapped is used to send the SR; or
an SR configuration onto which a logical channel that has a highest priority in the first logical channel and the second logical channel is mapped is used to send the SR; or
an SR configuration in which a time location of a scheduling request resource is closest to a current time and that is of the SR configuration onto which the first logical channel is mapped and the SR configuration onto which the second logical channel is mapped is used to send the SR; or
an SR configuration in which a time length of the scheduling request prohibit timer is the shortest and that is of the SR configuration onto which the first logical channel is mapped and the SR configuration onto which the second logical channel is mapped is used to send the SR; or
an SR configuration whose quantity of maximum retransmission times of the scheduling request is the largest and that is of the SR configuration onto which the first logical channel is mapped and the SR configuration onto which the second logical channel is mapped is used to send the SR; wherein
the second logical channel is a logical channel in which data triggers the buffer status report BSR and that is configured with the logical channel scheduling request prohibition.

12. A terminal device (90), wherein the terminal device comprises a processor (901), and the processor (901) is configured to:
if data on a first logical channel of a terminal device triggers a buffer status report BSR, (S501) the first logical channel is not configured with logical channel scheduling request prohibition (S502), and an SR configuration onto which the first logical channel is mapped is a second SR configuration (S503), when a logical channel scheduling request prohibit timer associated with the second SR configuration is running:
stop the logical channel scheduling request prohibit timer associated with the second SR configuration, and trigger a scheduling request SR; wherein
the terminal device is configured with at least two SR configurations, the at least two SR configurations comprise the second SR configuration, and each of the at least two SR configurations is associated with its respective logical channel scheduling request prohibit timer.

13. A computer readable storage medium, wherein the computer readable storage medium stores a program instruction, and when the program instruction is executed by a processor, the method according to any one of claims 1 to 7 is implemented.

## Patentansprüche

1. Zeitplanungsanforderung-Sendeverfahren, das Folgendes umfasst:
falls Daten auf einem ersten logischen Kanal einer Endgerätevorrichtung einen Pufferstatusreport, BSR, auslösen (S201) und der erste logische Kanal nicht mit einer Logischer-Kanal-Zeitplanungsanforderung-Prohibition konfiguriert ist (S202);
Auslösen (S203) einer Zeitplanungsanforderung SR in einem laufenden Prozess eines Logischer-Kanal-Zeitplanungsanforderung-Prohibitionstimers und Bestimmen, durch die Endgerätevorrichtung, ob die SR gesendet werden soll.

2. Verfahren nach Anspruch 1, wobei die Endgerätevorrichtung mit mindestens zwei SR-Konfigurationen konfiguriert ist und der erste logische Kanal auf mindestens eine SR-Konfiguration abgebildet ist; und, falls die Endgerätevorrichtung bestimmt, die SR zu senden, das Verfahren ferner Folgendes umfasst:
Senden, durch die Endgerätevorrichtung, der SR unter Verwendung einer SR-Konfiguration in der mindestens einen SR-Konfiguration.

3. Zeitplanungsanforderung-Sendeverfahren, das Folgendes umfasst:
falls Daten auf einem ersten logischen Kanal einer Endgerätevorrichtung einen Pufferstatusreport, BSR, auslösen (S301) und der erste logische Kanal nicht mit einer Logischer-Kanal-Zeitplanungsanforderung-Prohibition konfiguriert ist (S302), wenn ein Logischer-Kanal-Zeitplanungsanforderung-Prohibitionstimer läuft;
falls (S303) sich eine SR-Konfiguration, auf die der erste logische Kanal abgebildet ist, von einer SR-Konfiguration, auf die ein zweiter logischer Kanal abgebildet ist, unterscheidet, Auslösen einer Zeitplanungsanforderung SR und Bestimmen, durch die Endgerätevorrichtung, ob die SR gesendet werden soll; oder
falls (S304) eine SR-Konfiguration, auf die der erste logische Kanal abgebildet ist, dieselbe wie eine SR-Konfiguration, auf die ein zweiter logischer Kanal abgebildet ist, ist, Stoppen, durch die Endgerätevorrichtung, des Logischer-Kanal-Zeitplanungsanforderung-Prohibitionstimers, Auslösen einer Zeitplanungsanforderung SR und Bestimmen, durch die Endgerätevorrichtung, ob die SR gesendet werden soll; wobei
der zweite logische Kanal ein logischer Kanal ist, in dem Daten den Pufferstatusreport, BSR, auslösen und der mit der Logischer-Kanal-Zeitplanungsanforderung-Prohibition konfiguriert ist.

4. Verfahren nach Anspruch 3, wobei eine Anzahl des zweiten logischen Kanals mindestens zwei ist, und wobei, dass sich die SR-Konfiguration, auf die der erste logische Kanal abgebildet ist, von der SR-Konfiguration, auf die der zweite logische Kanal abgebildet ist, unterscheidet, umfasst, dass:
sich die SR-Konfiguration, auf die der erste logische Kanal abgebildet ist, von einer SR-Konfiguration, auf die irgendeiner der mindestens zwei zweiten logischen Kanäle abgebildet ist, unterscheidet; oder
sich die SR-Konfiguration, auf die der erste logische Kanal abgebildet ist, von einer SR-Konfiguration, auf die ein zweiter logischer Kanal, der der letzte in den mindestens zwei zweiten logischen Kanälen ist, der den Pufferstatusreport, BSR, auslöst, abgebildet ist, unterscheidet; oder
sich die SR-Konfiguration, auf die der erste logische Kanal abgebildet ist, von einer SR-Konfiguration, auf die ein zweiter logischer Kanal, der in den mindestens zwei zweiten logischen Kanälen eine höchste Priorität aufweist, abgebildet ist, unterscheidet.

5. Verfahren nach Anspruch 3, wobei der erste logische Kanal auf mindestens zwei SR-Konfigurationen abgebildet ist, und wobei, dass sich die SR-Konfiguration, auf die der erste logische Kanal abgebildet ist, von der SR-Konfiguration, auf die der zweite logische Kanal abgebildet ist, unterscheidet, umfasst, dass:
sich eine erste SR-Konfiguration von der SR-Konfiguration, auf die der zweite logische Kanal abgebildet ist, unterscheidet und die erste SR-Konfiguration eine SR-Konfiguration ist, die sich in den mindestens zwei SR-Konfigurationen befindet, auf die der erste logische Kanal abgebildet ist und die mit einem Angabeparameter assoziiert ist, der von aktuell zu übertragenden Daten benötigt wird, wobei der Angabeparameter ein Übertragungszeitintervall, TTI, und/oder eine Unterträgerbeabstandung und/oder eine Zyklischer-Präfix-Länge umfasst; oder
sich irgendeine der mindestens zwei SR-Konfigurationen von der SR-Konfiguration, auf die der zweite logische Kanal abgebildet ist, unterscheidet; oder
sich die mindestens zwei SR-Konfigurationen allesamt von der SR-Konfiguration unterscheiden, auf die der zweite logische Kanal abgebildet ist.

6. Zeitplanungsanforderung-Sendeverfahren, das Folgendes umfasst:
falls Daten auf einem ersten logischen Kanal einer Endgerätevorrichtung einen Pufferstatusreport, BSR, auslösen (S401) und der erste logische Kanal nicht mit einer Logischer-Kanal-Zeitplanungsanforderung-Prohibition konfiguriert ist (S402), wenn (S403) ein Logischer-Kanal-Zeitplanungsanforderung-Prohibitionstimer läuft;
Stoppen (S403), durch die Endgerätevorrichtung, des Logischer-Kanal-Zeitplanungsanforderung-Prohibitionstimers, Auslösen einer Zeitplanungsanforderung SR, Abbilden des ersten logischen Kanals auf mindestens eine SR-Konfiguration und Abbilden eines zweiten logischen Kanals auf mindestens eine SR-Konfiguration, wobei die SR-Konfiguration, auf die der erste logische Kanal abgebildet ist, zum Senden der SR verwendet wird; oder
eine SR-Konfiguration, auf die ein logischer Kanal, der in dem ersten logischen Kanal und dem zweiten logischen Kanal die höchste Priorität aufweist, abgebildet ist, zum Senden der SR verwendet wird; oder
eine SR-Konfiguration, in der ein Zeitpunkt einer Zeitplanungsanforderungsressource einer aktuellen Zeit am nächsten liegt und die zu der SR-Konfiguration, auf die der erste logische Kanal abgebildet ist, und der SR-Konfiguration, auf die der zweite logische Kanal abgebildet ist, gehört, zum Senden der SR verwendet wird; oder
eine SR-Konfiguration, in der eine Zeitdauer des Zeitplanungsanforderung-Prohibitionstimers die kürzeste ist und die zu der SR-Konfiguration, auf die der erste logische Kanal abgebildet ist, und der SR-Konfiguration, auf die der zweite logische Kanal abgebildet ist, gehört, zum Senden der SR verwendet wird; oder
eine SR-Konfiguration, deren Anzahl von Maximaler-Neuübertragung-Malen der Zeitplanungsanforderung die größte ist und die zu der SR-Konfiguration, auf die der erste logische Kanal abgebildet ist, und der SR-Konfiguration, auf die der zweite logische Kanal abgebildet ist, gehört, zum Senden der SR verwendet wird; wobei der zweite logische Kanal ein logischer Kanal ist, in dem Daten den Pufferstatusreport, BSR, auslösen und der mit der Logischer-Kanal-Zeitplanungsanforderung-Prohibition konfiguriert ist.

7. Zeitplanungsanforderung-Sendeverfahren, das Folgendes umfasst:
falls (S501) Daten auf einem ersten logischen Kanal einer Endgerätevorrichtung einen Pufferstatusreport, BSR, auslösen, der erste Logikkanal nicht mit einer Logischer-Kanal-Zeitplanungsanforderung-Prohibition konfiguriert ist (S502) und eine SR-Konfiguration, auf die der erste logische Kanal abgebildet ist, eine zweite SR-Konfiguration ist, wenn (S503) ein mit der zweiten SR-Konfiguration assoziierter Logischer-Kanal-Zeitplanungsanforderung-Prohibitionstimer läuft;
Stoppen (S503), durch die Endgerätevorrichtung, des mit der zweiten SR-Konfiguration assoziierten Logischer-Kanal-Zeitplanungsanforderung-Prohibitionstimers und Auslösen einer Zeitplanungsanforderung SR; wobei
die Endgerätevorrichtung mit mindestens zwei SR-Konfigurationen konfiguriert ist, die mindestens zwei SR-Konfigurationen die zweite SR-Konfiguration umfassen, und jede der mindestens zwei SR-Konfigurationen mit deren jeweiligem Logischer-Kanal-Zeitplanungsanforderung-Prohibitionstimer assoziiert ist.

8. Endgerätevorrichtung (60), wobei die Endgerätevorrichtung einen Prozessor (601) umfasst, und wobei der Prozessor (601) ausgelegt ist zum:
falls Daten auf einem ersten logischen Kanal einer Endgerätevorrichtung einen Pufferstatusreport, BSR, auslösen (S201) und der erste logische Kanal nicht mit einer Logischer-Kanal-Zeitplanungsanforderung-Prohibition konfiguriert ist (S202);
Auslösen (S203) einer Zeitplanungsanforderung SR in einem laufenden Prozess eines Logischer-Kanal-Zeitplanungsanforderung-Prohibitionstimers und Bestimmen, ob die SR gesendet werden soll.

9. Endgerätevorrichtung nach Anspruch 8, wobei die Endgerätevorrichtung ferner einen Transceiver umfasst, die Endgerätevorrichtung mit mindestens zwei SR-Konfigurationen konfiguriert ist und der erste logische Kanal auf mindestens eine SR-Konfiguration abgebildet ist; und, falls der Prozessor bestimmt, die SR zu senden, der Prozessor ferner ausgelegt ist zum:
Senden, durch den Transceiver, der SR unter Verwendung einer SR-Konfiguration in der mindestens einen SR-Konfiguration.

10. Endgerätevorrichtung (70), wobei die Endgerätevorrichtung einen Prozessor (701) umfasst, und wobei der Prozessor (701) ausgelegt ist zum:
falls Daten auf einem ersten logischen Kanal einer Endgerätevorrichtung einen Pufferstatusreport, BSR, auslösen (S301) und der erste logische Kanal nicht mit einer Logischer-Kanal-Zeitplanungsanforderung-Prohibition konfiguriert ist (S302), wenn ein Logischer-Kanal-Zeitplanungsanforderung-Prohibitionstimer läuft;
falls (S303) sich eine SR-Konfiguration, auf die der erste logische Kanal abgebildet ist, von einer SR-Konfiguration, auf die ein zweiter logischer Kanal abgebildet ist, unterscheidet, Auslösen einer Zeitplanungsanforderung SR und Bestimmen, ob die SR gesendet werden soll; oder
falls (S304) eine SR-Konfiguration, auf die der erste logische Kanal abgebildet ist, dieselbe wie eine SR-Konfiguration, auf die der zweite logische Kanal abgebildet ist, ist, Stoppen, durch die Endgerätevorrichtung, des Logischer-Kanal-Zeitplanungsanforderung-Prohibitionstimers, Auslösen einer Zeitplanungsanforderung SR und Bestimmen, ob die SR gesendet werden soll; wobei
der zweite logische Kanal ein logischer Kanal ist, in dem Daten den Pufferstatusreport, BSR, auslösen und der mit der Logischer-Kanal-Zeitplanungsanforderung-Prohibition konfiguriert ist.

11. Endgerätevorrichtung (80), wobei die Endgerätevorrichtung einen Prozessor (801) umfasst, und wobei der Prozessor (801) ausgelegt ist zum:
falls Daten auf einem ersten logischen Kanal einer Endgerätevorrichtung einen Pufferstatusreport, BSR, auslösen (401) und der erste logische Kanal nicht mit einer Logischer-Kanal-Zeitplanungsanforderung-Prohibition konfiguriert ist (402), wenn (403) ein Logischer-Kanal-Zeitplanungsanforderung-Prohibitionstimer läuft;
Stoppen (S403) des Logischer-Kanal-Zeitplanungsanforderung-Prohibitionstimers, Auslösen einer Zeitplanungsanforderung SR, Abbilden des ersten logischen Kanals auf mindestens eine SR-Konfiguration und Abbilden eines zweiten logischen Kanals auf mindestens eine SR-Konfiguration, wobei
die SR-Konfiguration, auf die der erste logische Kanal abgebildet ist, zum Senden der SR verwendet wird; oder
eine SR-Konfiguration, auf die ein logischer Kanal, der in dem ersten logischen Kanal und dem zweiten logischen Kanal die höchste Priorität aufweist, abgebildet ist, zum Senden der SR verwendet wird; oder
eine SR-Konfiguration, in der ein Zeitpunkt einer Zeitplanungsanforderungsressource einer aktuellen Zeit am nächsten liegt und die zu der SR-Konfiguration, auf die der erste logische Kanal abgebildet ist, und der SR-Konfiguration, auf die der zweite logische Kanal abgebildet ist, gehört, zum Senden der SR verwendet wird; oder
eine SR-Konfiguration, in der eine Zeitdauer des Zeitplanungsanforderung-Prohibitionstimers die kürzeste ist und die zu der SR-Konfiguration, auf die der erste logische Kanal abgebildet ist, und der SR-Konfiguration, auf die der zweite logische Kanal abgebildet ist, gehört, zum Senden der SR verwendet wird; oder
eine SR-Konfiguration, deren Anzahl von Maximaler-Neuübertragung-Malen der Zeitplanungsanforderung die größte ist und die zu der SR-Konfiguration, auf die der erste logische Kanal abgebildet ist, und der SR-Konfiguration, auf die der zweite logische Kanal abgebildet ist, gehört, zum Senden der SR verwendet wird; wobei der zweite logische Kanal ein logischer Kanal ist, in dem Daten den Pufferstatusreport, BSR, auslösen und der mit der Logischer-Kanal-Zeitplanungsanforderung-Prohibition konfiguriert ist.

12. Endgerätevorrichtung (90), wobei die Endgerätevorrichtung einen Prozessor (901) umfasst, und wobei der Prozessor (901) ausgelegt ist zum:
falls Daten auf einem ersten logischen Kanal einer Endgerätevorrichtung einen Pufferstatusreport, BSR, auslösen (S501), der erste Logikkanal nicht mit einer Logischer-Kanal-Zeitplanungsanforderung-Prohibition konfiguriert ist (S502) und eine SR-Konfiguration, auf die der erste logische Kanal abgebildet ist, eine zweite SR-Konfiguration ist (S503), wenn ein mit der zweiten SR-Konfiguration assoziierter Logischer-Kanal-Zeitplanungsanforderung-Prohibitionstimer läuft;
Stoppen des mit der zweiten SR-Konfiguration assoziierten Logischer-Kanal-Zeitplanungsanforderung-Prohibitionstimers und Auslösen einer Zeitplanungsanforderung SR; wobei
die Endgerätevorrichtung mit mindestens zwei SR-Konfigurationen konfiguriert ist, die mindestens zwei SR-Konfigurationen die zweite SR-Konfiguration umfassen, und jede der mindestens zwei SR-Konfigurationen mit deren jeweiligem Logischer-Kanal-Zeitplanungsanforderung-Prohibitionstimer assoziiert ist.

13. Computerlesbares Speicherungsmedium, wobei das computerlesbare Speicherungsmedium eine Programmanweisung speichert, und wenn die Programmanweisung durch einen Prozessor ausgeführt wird, das Verfahren nach einem der Ansprüche 1 bis 7 implementiert wird.

## Revendications

1. Procédé d'envoi de demande de planification, comprenant les étapes consistant à :
si des données sur un premier canal logique d'un dispositif terminal déclenchent un rapport d'état de tampon (BSR) (S201) et si le premier canal logique n'est pas configuré avec une interdiction de demande de planification de canal logique (S202) :
déclencher (S203) une demande de planification (SR) dans un processus d'exécution d'un temporisateur d'interdiction de demande de planification de canal logique et déterminer, par le dispositif terminal, s'il faut envoyer la SR.

2. Procédé selon la revendication 1, dans lequel le dispositif terminal est configuré avec au moins deux configurations SR et le premier canal logique est mis en concordance avec au moins une configuration SR ; et si le dispositif terminal détermine qu'il faut envoyer la SR, le procédé comprenant en outre l'étape consistant à :
envoyer, par le dispositif terminal, la SR au moyen d'une configuration SR parmi l'au moins une configuration SR.

3. Procédé d'envoi de demande de planification, comprenant les étapes consistant à :
si des données sur un premier canal logique d'un dispositif terminal déclenchent un rapport d'état de tampon (BSR) (S301) et si le premier canal logique n'est pas configuré avec une interdiction de demande de planification de canal logique (S302), quand un temporisateur d'interdiction de demande de planification de canal logique est en cours d'exécution :
si (S303) une configuration SR avec laquelle le premier canal logique est mis en concordance est différente d'une configuration SR avec laquelle un second canal logique est mis en concordance, déclencher une demande de planification (SR) et déterminer, par le dispositif terminal, s'il faut envoyer la SR ; ou
si (S304) une configuration SR avec laquelle le premier canal logique est mis en concordance est la même qu'une configuration SR avec laquelle un second canal logique est mis en concordance, arrêter, par le dispositif terminal, le temporisateur d'interdiction de demande de planification de canal logique, déclencher une demande de planification (SR) et déterminer, par le dispositif terminal, s'il faut envoyer la SR ;
le second canal logique étant un canal logique où des données déclenchent le rapport d'état de tampon (BSR) et qui est configuré avec l'interdiction de demande de planification de canal logique.

4. Procédé selon la revendication 3, dans lequel un nombre de seconds canaux logiques est au moins égal à deux et le fait que la configuration SR avec laquelle le premier canal logique est mis en concordance soit différente de la configuration SR avec laquelle le second canal logique est mis en concordance consiste en ce que :
la configuration SR avec laquelle le premier canal logique est mis en concordance est différente d'une configuration SR avec laquelle l'un quelconque des au moins deux seconds canaux logiques est mis en concordance ; ou
la configuration SR avec laquelle le premier canal logique est mis en concordance est différente d'une configuration SR avec laquelle un second canal logique, qui est le dernier des au moins deux seconds canaux logiques qui déclenche le rapport d'état de tampon (BSR), est mis en concordance ; ou
la configuration SR avec laquelle le premier canal logique est mis en concordance est différente d'une configuration SR avec laquelle un second canal logique, qui a une priorité maximale parmi les au moins deux seconds canaux logiques, est mis en concordance.

5. Procédé selon la revendication 3, dans lequel le premier canal logique est mis en concordance avec au moins deux configurations SR et le fait que la configuration SR avec laquelle le premier canal logique est mis en concordance soit différente de la configuration SR avec laquelle le second canal logique est mis en concordance consiste en ce que :
une première configuration SR est différente de la configuration SR avec laquelle le second canal logique est mis en concordance et la première configuration SR est une configuration SR qui est parmi les au moins deux configurations SR avec lesquelles le premier canal logique est mis en concordance et qui est associée à un paramètre d'indication requis par des données à transmettre actuelles, le paramètre d'indication comprenant au moins un paramètre parmi un intervalle de temps de transmission (TTI), un espacement de sous-porteuses et une longueur de préfixe cyclique ; ou
l'une quelconque des au moins deux configurations SR est différente de la configuration SR avec laquelle le second canal logique est mis en concordance ; ou
les au moins deux configurations SR sont toutes différentes de la configuration SR avec laquelle le second canal logique est mis en concordance.

6. Procédé d'envoi de demande de planification, comprenant les étapes consistant à :
si des données sur un premier canal logique d'un dispositif terminal déclenchent un rapport d'état de tampon (BSR) (S401) et si le premier canal logique n'est pas configuré avec une interdiction de demande de planification de canal logique (S402), quand (S403) un temporisateur d'interdiction de demande de planification de canal logique est en cours d'exécution :
arrêter (S403), par le dispositif terminal, le temporisateur d'interdiction de demande de planification de canal logique, déclencher une demande de planification (SR), mettre en concordance le premier canal logique avec au moins une configuration SR et mettre en concordance un second canal logique avec au moins une configuration SR, où :
la configuration SR avec laquelle le premier canal logique est mis en concordance est utilisée pour envoyer la SR ; ou
une configuration SR avec laquelle est mis en concordance un canal logique qui a une priorité maximale parmi le premier canal logique et le second canal logique est utilisée pour envoyer la SR ; ou
une configuration SR où un emplacement temporel d'une ressource de demande de planification est le plus proche d'un moment actuel et qui est de la configuration SR avec laquelle le premier canal logique est mis en concordance et de la configuration SR avec laquelle le second canal logique est mis en concordance est utilisée pour envoyer la SR ; ou
une configuration SR où une durée du temporisateur d'interdiction de demande de planification est la plus courte et qui est de la configuration SR avec laquelle le premier canal logique est mis en concordance et de la configuration SR avec laquelle le second canal logique est mis en concordance est utilisée pour envoyer la SR ; ou
une configuration SR dont le nombre de temps de retransmission maximums de la demande de planification est le plus grand et qui est de la configuration SR avec laquelle le premier canal logique est mis en concordance et de la configuration SR avec laquelle le second canal logique est mis en concordance est utilisée pour envoyer la SR ;
le second canal logique étant un canal logique où des données déclenchent le rapport d'état de tampon (BSR) et qui est configuré avec l'interdiction de demande de planification de canal logique.

7. Procédé d'envoi de demande de planification, comprenant les étapes consistant à :
si (S501) des données sur un premier canal logique d'un dispositif terminal déclenchent un rapport d'état de tampon (BSR), si le premier canal logique n'est pas configuré avec une interdiction de demande de planification de canal logique (S502) et si une configuration SR avec laquelle le premier canal logique est mis en concordance est une seconde configuration SR, quand (S503) un temporisateur d'interdiction de demande de planification de canal logique, associé à la seconde configuration SR, est en cours d'exécution :
arrêter (S503), par le dispositif terminal, le temporisateur d'interdiction de demande de planification de canal logique, associé à la seconde configuration SR, et déclencher une demande de planification (SR) ;
le dispositif terminal étant configuré avec au moins deux configurations SR, les au moins deux configurations SR comprenant la seconde configuration SR et chacune des au moins deux configurations SR étant associée à son temporisateur d'interdiction de demande de planification de canal logique respectif.

8. Dispositif terminal (60), le dispositif terminal comprenant un processeur (601) et le processeur (601) étant configuré pour :
si des données sur un premier canal logique d'un dispositif terminal déclenchent un rapport d'état de tampon (BSR) (S201) et si le premier canal logique n'est pas configuré avec une interdiction de demande de planification de canal logique (S202) :
déclencher (S203) une demande de planification (SR) dans un processus d'exécution d'un temporisateur d'interdiction de demande de planification de canal logique et déterminer s'il faut envoyer la SR.

9. Dispositif terminal selon la revendication 8, le dispositif terminal comprenant en outre un émetteur-récepteur ; le dispositif terminal étant configuré avec au moins deux configurations SR et le premier canal logique étant mis en concordance avec au moins une configuration SR ; et si le processeur détermine qu'il faut envoyer la SR, le processeur étant en outre configuré pour :
envoyer, par l'émetteur-récepteur, la SR au moyen d'une configuration SR parmi l'au moins une configuration SR.

10. Dispositif terminal (70), le dispositif terminal comprenant un processeur (701) et le processeur (701) étant configuré pour :
si des données sur un premier canal logique d'un dispositif terminal déclenchent un rapport d'état de tampon (BSR) (S301) et si le premier canal logique n'est pas configuré avec une interdiction de demande de planification de canal logique (S302), quand un temporisateur d'interdiction de demande de planification de canal logique est en cours d'exécution :
si (S303) une configuration SR avec laquelle le premier canal logique est mis en concordance est différente d'une configuration SR avec laquelle le second canal logique est mis en concordance, déclencher une demande de planification (SR) et déterminer s'il faut envoyer la SR ; ou
si (S304) une configuration SR avec laquelle le premier canal logique est mis en concordance est la même qu'une configuration SR avec laquelle le second canal logique est mis en concordance, arrêter, par le dispositif terminal, le temporisateur d'interdiction de demande de planification de canal logique, déclencher une demande de planification (SR) et déterminer s'il faut envoyer la SR ;
le second canal logique étant un canal logique où des données déclenchent le rapport d'état de tampon (BSR) et qui est configuré avec l'interdiction de demande de planification de canal logique.

11. Dispositif terminal (80), le dispositif terminal comprenant un processeur (801) et le processeur (801) étant configuré pour :
si des données sur un premier canal logique d'un dispositif terminal déclenchent un rapport d'état de tampon (BSR) (401) et si le premier canal logique n'est pas configuré avec une interdiction de demande de planification de canal logique (402), quand (403) un temporisateur d'interdiction de demande de planification de canal logique est en cours d'exécution :
arrêter (S403) le temporisateur d'interdiction de demande de planification de canal logique, déclencher une demande de planification (SR), mettre en concordance le premier canal logique avec au moins une configuration SR et mettre en concordance un second canal logique avec au moins une configuration SR, où :
la configuration SR avec laquelle le premier canal logique est mis en concordance est utilisée pour envoyer la SR ; ou
une configuration SR avec laquelle est mis en concordance un canal logique qui a une priorité maximale parmi le premier canal logique et le second canal logique est utilisée pour envoyer la SR ; ou
une configuration SR où un emplacement temporel d'une ressource de demande de planification est le plus proche d'un moment actuel et qui est de la configuration SR avec laquelle le premier canal logique est mis en concordance et de la configuration SR avec laquelle le second canal logique est mis en concordance est utilisée pour envoyer la SR ; ou
une configuration SR où une durée du temporisateur d'interdiction de demande de planification est la plus courte et qui est de la configuration SR avec laquelle le premier canal logique est mis en concordance et de la configuration SR avec laquelle le second canal logique est mis en concordance est utilisée pour envoyer la SR ; ou
une configuration SR dont le nombre de temps de retransmission maximums de la demande de planification est le plus grand et qui est de la configuration SR avec laquelle le premier canal logique est mis en concordance et de la configuration SR avec laquelle le second canal logique est mis en concordance est utilisée pour envoyer la SR ;
le second canal logique étant un canal logique où des données déclenchent le rapport d'état de tampon (BSR) et qui est configuré avec l'interdiction de demande de planification de canal logique.

12. Dispositif terminal (90), le dispositif terminal comprenant un processeur (901) et le processeur (901) étant configuré pour :
si des données sur un premier canal logique d'un dispositif terminal déclenchent un rapport d'état de tampon (BSR) (S501), si le premier canal logique n'est pas configuré avec une interdiction de demande de planification de canal logique (S502) et si une configuration SR avec laquelle le premier canal logique est mis en concordance est une seconde configuration SR (S503), quand un temporisateur d'interdiction de demande de planification de canal logique, associé à la seconde configuration SR, est en cours d'exécution :
arrêter le temporisateur d'interdiction de demande de planification de canal logique, associé à la seconde configuration SR, et déclencher une demande de planification (SR) ;
le dispositif terminal étant configuré avec au moins deux configurations SR, les au moins deux configurations SR comprenant la seconde configuration SR et chacune des au moins deux configurations SR étant associée à son temporisateur d'interdiction de demande de planification de canal logique respectif.

13. Support de stockage lisible par ordinateur, le support de stockage lisible par ordinateur stockant une instruction de programme et le procédé selon l'une quelconque des revendications 1 à 7 étant mis en oeuvre quand l'instruction de programme est exécutée par un processeur.
